# EUROPEAN PATENT APPLICATION

(11) **EP 4 583 577 A1**
(43) Date of publication of application: **09.07.2025**
(21) Application number: 23870502.4
(22) Date of filing: 19.09.2023
(51) Int. Cl.: H04W 36/00

(54) **HANDOVER METHOD AND COMMUNICATION APPARATUS**

(30) Priority: 30.09.2022 CN 202211214371
(71) Applicant: Huawei Technologies Co., Ltd., Shenzhen, Guangdong 518129 (CN)
(72) Inventor: YOU, Chunhua, Shenzhen, Guangdong 518129 (CN); FAN, Qiang, Shenzhen, Guangdong 518129 (CN); LOU, Chong, Shenzhen, Guangdong 518129 (CN)
(74) Representative: Pfenning, Meinig & Partner mbB
(86) International application number: PCT/CN2023/119854
(87) International publication number: WO 2024/067270

(57) **Abstract**

This application provides a handover method and a communication apparatus. The handover method includes: A terminal device receives configuration information of a first candidate cell group from a first distributed unit DU, where the configuration information of the first candidate cell group includes configuration information of a first cell and identification information of the first candidate cell group corresponding to the first cell; the terminal device sends a measurement result of the first candidate cell group to the first DU; the terminal device receives a handover command from the first DU, where the handover command includes the identification information of the first candidate cell group; and the terminal device performs a handover to the first cell based on the identification information of the first candidate cell group. According to the handover method, after reporting a measurement result to a source DU, the terminal device may perform a cell handover based on a handover command of the source DU, to improve cell handover efficiency of the terminal device.

## Description

This application claims priority to Chinese Patent Application No. 202211214371.0, filed with the China National Intellectual Property Administration on September 30, 2022 and entitled "HANDOVER METHOD AND COMMUNICATION APPARATUS", which is incorporated herein by reference in its entirety.

### TECHNICAL FIELD

This application relates to the field of communication technologies, and in particular, to a handover method and a communication apparatus.

### BACKGROUND

Generally, in a cell handover procedure based on layer 3 (also referred to as L3) signaling, a terminal device sends a measurement report to a central unit (Central Unit, CU) through the L3 signaling, and then the CU performs, based on the measurement report, subsequent handover procedures such as handover decision and requesting a distributed unit (distributed unit, DU) corresponding to a target cell to perform user resource allocation.

In such a handover procedure, there is a long interruption delay in a procedure from initiating a handover by the terminal device (which may be understood as sending the measurement report by the terminal device) to performing the handover to the target cell by the terminal device. Consequently, a throughput of a communication system decreases.

### SUMMARY

Embodiments of this application provide a handover method and a communication apparatus, to reduce an interruption delay and ensure a throughput of a communication system.

According to a first aspect, an embodiment of this application provides a handover method. In the method, a terminal device receives configuration information of a first candidate cell group from a first distributed unit DU, where the configuration information of the first candidate cell group includes configuration information of a first cell and identification information of the first candidate cell group; the terminal device sends a measurement result of the first candidate cell group to the first DU, and receives a handover command from the first DU, where the handover command includes the identification information of the first candidate cell group; and the terminal device performs a handover to the first cell based on the identification information of the first candidate cell group.

Based on the method provided in the first aspect, after the terminal device sends a measurement report to a source DU, the source DU may directly send, to the terminal device, a handover command indicating the terminal device to perform a cell handover, and the CU does not need to request a user resource or the like based on the measurement report. Therefore, operation steps between sending the measurement report by the terminal device and receiving the handover command by the terminal device are reduced, an interruption delay in a cell handover procedure is shortened, and a throughput of a communication system is ensured.

In a possible implementation, the terminal device performs data transmission based on the configuration information of the first cell via the first cell and a second DU corresponding to the first cell.

In a possible implementation, the terminal device performs the handover to the first cell and a third cell in the first candidate cell group based on the identification information of the first candidate cell group, where the first cell is a primary cell in the first candidate cell group, the third cell is a secondary cell in the first candidate cell group, and the first candidate cell group is different from a cell group of the terminal device before the handover. When the possible implementation is implemented, the terminal device may perform a group cell handover, to ensure a throughput of the terminal device before and after the handover.

In a possible implementation, the configuration information of the first candidate cell group includes a first index, and the first index identifies the first cell in the first candidate cell group. When the possible implementation is implemented, the terminal device and a network side can identify a unique cell only based on a cell index, and do not need to expose a cell global identifier or a physical cell identifier (Physical Cell Identifier, PCI) of the cell to the terminal device. This avoids a security risk in a handover procedure.

In a possible implementation, the handover command further includes the first index.

In a possible implementation, the terminal device determines the first candidate cell group based on the identification information of the first candidate cell group, and performs, based on the first index, the handover to the first cell corresponding to the first index in the first candidate cell group.

In a possible implementation, a bit of the first index is smaller than a bit of a cell global identifier of the first cell, or is smaller than a bit of a PCI of the first cell. When the possible implementation is implemented, transmission resources can be saved.

In a possible implementation, the configuration information of the first candidate cell group is encrypted. When the possible implementation is implemented, network security can be improved.

**In** a possible implementation, the terminal device receives indication information of a first resource from the first DU; and the terminal device sends the measurement result of the first candidate cell group to the first DU via the first resource. When the possible implementation is implemented, the measurement result of the candidate cell group is transmitted via a dedicated resource, the measurement result does not need to include the identification information of the candidate cell group, and the first DU may also know a correspondence between the measurement result and the candidate cell group. This saves communication transmission resources.

**In** a possible implementation, the measurement result of the first candidate cell group is a measurement result of the first cell, and the measurement result of the first cell includes the first index and a group identifier of the first candidate group.

In a possible implementation, the measurement result of the first candidate cell group is obtained based on the measurement result of the first cell and a measurement result of a second cell, the second cell belongs to the first candidate cell group, and the measurement result of the first candidate cell group includes the identification information of the first candidate cell group.

In a possible implementation, the configuration information of the first candidate cell group includes configuration information of one candidate primary cell and configuration information of at least one first candidate secondary cell.

In a possible implementation, the configuration information of the first candidate cell group further includes configuration information of at least one second candidate secondary cell, and the second candidate secondary cell is used for a plurality of secondary cell handovers.

In a possible implementation, the terminal device receives first indication information from the first DU, where the first indication information indicates consecutive handovers after a single handover, the configuration information of the first candidate cell group is used for one handover in the single handover, and the configuration information of the first candidate cell group is used for a plurality of handovers in the consecutive handovers. **In** this possible implementation, when the first indication information indicates the consecutive handovers, the network side does not need to deliver the configuration information to the terminal device each time the handover is performed, so that communication resources are saved. When the first indication information indicates the single handover, adaptation between the configuration information delivered by the network side and the terminal device during each handover can be improved.

In a possible implementation, the configuration information of the first cell includes first configuration information of the first cell serving as a candidate primary cell and second configuration information of the first cell serving as a candidate secondary cell.

In a possible implementation, the handover command further includes second indication information, and the second indication information indicates that the first cell is a primary cell or a secondary cell. Further, if the second indication information indicates that the first cell is the primary cell, the terminal device performs data transmission based on the first configuration information of the first cell; or if the second indication information indicates that the first cell is the secondary cell, the terminal device performs data transmission based on the second configuration information of the first cell. When the possible implementation method is implemented, in the handover procedure, the first DU can flexibly indicate the terminal device to perform a primary cell handover or a secondary cell handover, to meet a service requirement of the terminal device.

In a possible implementation, the first cell is a candidate primary cell in the first candidate cell group, and the terminal device receives first activation indication information from the first DU, where the first activation indication information indicates an initial status and/or an initial status of a BWP of at least one candidate secondary cell in the first candidate cell group, and the initial status includes an active state or an inactive state. In this possible implementation, after connecting to the primary cell in the first candidate cell group, the terminal device may quickly perform CA activation (that is, activate the secondary cell) based on the service requirement of the terminal device, to ensure that a throughput after the handover is close to or the same as a throughput before the handover, thereby ensuring communication transmission stability.

According to a second aspect, an embodiment of this application provides a handover method. In the method, a first DU receives a first message from a central unit CU, where the first message includes configuration information of a first candidate group, and the configuration information of the first candidate cell group includes configuration information of a first cell and identification information of the first candidate cell group; the first DU sends the configuration information of the first candidate cell group to a terminal device; and the first DU receives a measurement result of the first candidate cell group from the terminal device, and sends a handover command to the terminal device based on the measurement result of the first candidate cell group, where the handover command includes the identification information of the first candidate cell group.

Based on the method provided in the second aspect, after the terminal device sends a measurement report to a source DU, the source DU may directly send, to the terminal device, a handover command indicating the terminal device to perform a cell handover, and the CU does not need to request a user resource or the like based on the measurement report. Therefore, operation steps between sending the measurement report by the terminal device and receiving the handover command by the terminal device are reduced, an interruption delay in a cell handover procedure is shortened, and a throughput of a communication system is ensured.

In a possible implementation, the configuration information of the first candidate cell group includes a first index, and the first index identifies the first cell in the first candidate cell group. When the possible implementation is implemented, the terminal device and a network side can identify a unique cell only based on a cell index, and do not need to expose a cell global identifier of the cell to the terminal device. This avoids a security risk in a handover procedure.

In a possible implementation, the handover command further includes a first index, and the first index indicates to perform the handover to the first cell. When the possible implementation is implemented, the terminal device and the network side can identify the unique cell only based on the cell index, and do not need to expose the cell global identifier of the cell to the terminal device. This avoids the security risk in the handover procedure.

In a possible implementation, a bit of the first index is smaller than a bit of a cell global identifier of the first cell, or is smaller than a bit of a PCI of the first cell. When the possible implementation is implemented, transmission resources can be saved.

In a possible implementation, the configuration information of the first candidate cell group is encrypted. When the possible implementation is implemented, network security can be improved.

In a possible implementation, the first message further includes the identification information of the first candidate cell group. It may be understood that the first message includes both the configuration information of the first candidate cell group and the identification information of the first candidate cell group. The configuration information of the first candidate cell group needs to be sent to the terminal device, and the first DU does not parse the configuration information of the first candidate cell group. In this possible implementation, the first DU may allocate a first resource based on the identification information of the first candidate cell group, so that the measurement result of the first candidate cell group is transmitted via a dedicated resource. The measurement result does not need to include the identification information of the candidate cell group, and the first DU may also know a correspondence between the measurement result and the candidate cell group. This saves communication transmission resources.

In a possible implementation, the first DU allocates the first resource based on the identification information of the first candidate cell group, and sends indication information of the first resource to the terminal device. When the possible implementation is implemented, the measurement result does not need to include the identification information of the candidate cell group, and the first DU may also know the correspondence between the measurement result and the candidate cell group. This saves the communication transmission resources.

In a possible implementation, there is an association relationship between the first resource and the first candidate cell group. The first DU receives the measurement result of the first candidate cell group from the terminal device via the first resource; and determines the first candidate cell group based on the association relationship between the first resource and the first candidate cell group.

In a possible implementation, there is an association relationship between the first resource and the first candidate cell. The first DU receives the measurement result of the first candidate cell group from the terminal device via the first resource, where the measurement result of the first candidate cell group includes a measurement result of the first cell; determines the first cell based on the association relationship between the first resource and the first cell; and determines the first candidate cell group based on the first cell.

In a possible implementation, the measurement result of the first candidate cell group is the measurement result of the first cell, and the measurement result of the first cell includes the first index and a group identifier of the first candidate group.

In a possible implementation, the measurement result of the first candidate cell group is obtained based on the measurement result of the first cell and a measurement result of a second cell, the second cell belongs to the first candidate cell group, and the measurement result of the first candidate cell group includes the identification information of the first candidate cell group.

In a possible implementation, the configuration information of the first candidate cell group includes configuration information of one candidate primary cell and configuration information of at least one first candidate secondary cell.

In a possible implementation, the configuration information of the first candidate cell group further includes configuration information of at least one second candidate secondary cell, and the second candidate secondary cell is used for a plurality of secondary cell handovers.

In a possible implementation, the first DU sends first indication information to the terminal device, where the first indication information indicates a single handover or consecutive handovers, the configuration information of the first candidate cell group is used for one handover in the single handover, and the configuration information of the first candidate cell group is used for a plurality of handovers in the consecutive handovers.

In a possible implementation, the configuration information of the first cell includes first configuration information of the first cell serving as a candidate primary cell and second configuration information of the first cell serving as a candidate secondary cell.

In a possible implementation, the handover command further includes second indication information, and the second indication information indicates that the first cell is a primary cell or a secondary cell.

In a possible implementation, the first DU receives a first request message from the CU, where the first request message is used to obtain an activation status and/or an activation status of a bandwidth part BWP of a secondary cell of the terminal device in the first DU. The first DU sends a first response message to the CU, where the first response message indicates the activation status and/or the activation status of the BWP of the secondary cell of the terminal device in the first DU.

In a possible implementation, the first cell is a candidate primary cell in the first candidate cell group. The first DU receives first activation indication information from the CU, where the first activation indication information indicates an initial status and/or an initial status of a BWP of at least one candidate secondary cell in the first candidate cell group, and the initial status includes an active state or an inactive state; and sends the first activation indication information to the terminal device.

According to a third aspect, an embodiment of this application provides a handover method. In the method, a CU sends a second request message to a second DU, where the second request message is used to request to set up a context for a terminal device, and the second request message includes a cell global identifier CGI of a first cell; the CU receives a second response message from the second DU, where the second response message includes configuration information of the first cell; and the CU sends a first message to a first DU, where the first message includes configuration information of a first candidate cell group, and the configuration information of the first candidate cell group includes configuration information of the first cell and identification information of the first candidate cell group.

Based on the method provided in the third aspect, for beneficial effect of the method, refer to beneficial effect of the method provided in the first aspect or the second aspect. Details are not described again.

In a possible implementation, the second request message further indicates the identification information of the first candidate cell group.

In a possible implementation, the configuration information of the first candidate cell group includes a first index, and the first index identifies the first cell in the first candidate cell group.

In a possible implementation, a bit of the first index is smaller than a bit of a cell global identifier of the first cell, or is smaller than a bit of a PCI of the first cell.

In a possible implementation, the configuration information of the first candidate cell group is encrypted.

In a possible implementation, the first message further includes the identification information of the first candidate cell group.

In a possible implementation, the configuration information of the first candidate cell group includes configuration information of one candidate primary cell and configuration information of at least one first candidate secondary cell.

In a possible implementation, the configuration information of the first candidate cell group further includes configuration information of at least one second candidate secondary cell, and the second candidate secondary cell is used for a plurality of secondary cell handovers.

In a possible implementation, the CU receives first indication information from the second DU, where the first indication information indicates a single handover or consecutive handovers, the configuration information of the first candidate cell group is used for one handover in the single handover, and the configuration information of the first candidate cell group is used for a plurality of handovers in the consecutive handovers; and sends the first indication information to the terminal device.

In a possible implementation, the configuration information of the first cell includes first configuration information of the first cell serving as a candidate primary cell and second configuration information of the first cell serving as a candidate secondary cell.

In a possible implementation, the CU sends a first request message to the first DU, where the first request message is used to obtain an activation status and/or an activation status of a BWP of a secondary cell of the terminal device in the first DU; receives a first response message from the first DU, where the first response message indicates the activation status and/or the activation status of the BWP of the secondary cell of the terminal device in the first DU; and sends candidate secondary cell activation status information to the second DU, where the candidate secondary cell activation status information is determined based on the first response message.

In a possible implementation, the CU receives first activation indication information from the second DU, where the first message further includes the first activation indication information, the first activation indication information indicates an initial status and/or an initial status of a BWP of at least one candidate secondary cell in a candidate cell group corresponding to the second DU, and the initial status includes an active state or an inactive state; and the CU sends the first activation indication information to the first DU.

According to a fourth aspect, an embodiment of this application provides a handover method. In the method, a second DU receives a second request message from a central unit CU, where the second request message is used to request to set up a context for a terminal device, and the second request message includes a cell global identifier CGI of a first cell; and the second DU sends a second response message to the CU, where the second response message includes configuration information of the first cell.

Based on the method provided in the fourth aspect, for beneficial effect of the method, refer to beneficial effect of the method provided in the first aspect or the second aspect. Details are not described again.

In a possible implementation, the second request message further indicates identification information of a first candidate cell group corresponding to the first cell.

In a possible implementation, the configuration information of the first cell includes configuration information corresponding to a cell type of the first cell, and the cell type includes a candidate primary cell, a first candidate secondary cell, or a second candidate secondary cell.

In a possible implementation, the second DU sends first indication information to the CU, where the first indication information indicates a single handover or consecutive handovers, configuration information of the first candidate cell group is used for one handover in the single handover, and the configuration information of the first candidate cell group is used for a plurality of handovers in the consecutive handovers.

In a possible implementation, the configuration information of the first cell includes first configuration information of the first cell serving as the candidate primary cell and second configuration information of the first cell serving as the candidate secondary cell.

In a possible implementation, the second DU receives candidate secondary cell activation status information from the CU, and determines the first activation indication information based on the candidate secondary cell activation status information, where the first activation indication information indicates an initial status and/or an initial status of a BWP of at least one candidate secondary cell in a candidate cell group corresponding to the second DU, and the initial status includes an active state or an inactive state; and the second DU sends the first activation indication information to the CU.

According to a fifth aspect, this application provides a communication apparatus. The apparatus may be an apparatus in a terminal device, or an apparatus that can be used together with the terminal device. The communication apparatus may alternatively be a chip system. The communication apparatus may perform the method in the first aspect. Functions of the communication apparatus may be implemented by hardware, or may be implemented by hardware executing corresponding software. The hardware or the software includes one or more units corresponding to the foregoing functions. The unit may be software and/or hardware. For operations performed by the communication apparatus and beneficial effect thereof, refer to the method in the first aspect and beneficial effect thereof. Repeated parts are not described again.

According to a sixth aspect, this application provides a communication apparatus. The apparatus may be an apparatus in a first DU, or an apparatus that can be used together with the first DU. The communication apparatus may alternatively be a chip system. The communication apparatus may perform the method in the second aspect. Functions of the communication apparatus may be implemented by hardware, or may be implemented by hardware executing corresponding software. The hardware or the software includes one or more units corresponding to the foregoing functions. The unit may be software and/or hardware. For operations performed by the communication apparatus and beneficial effect thereof, refer to the method in the second aspect and beneficial effect thereof. Repeated parts are not described again.

According to a seventh aspect, this application provides a communication apparatus. The apparatus may be an apparatus in a CU, or an apparatus that can be used together with the CU. The communication apparatus may alternatively be a chip system. The communication apparatus may perform the method in the third aspect. Functions of the communication apparatus may be implemented by hardware, or may be implemented by hardware executing corresponding software. The hardware or the software includes one or more units corresponding to the foregoing functions. The unit may be software and/or hardware. For operations performed by the communication apparatus and beneficial effect thereof, refer to the method in the third aspect and beneficial effect thereof. Repeated parts are not described again.

According to an eighth aspect, this application provides a communication apparatus. The apparatus may be an apparatus in a second DU, or an apparatus that can be used together with the second DU. The communication apparatus may alternatively be a chip system. The communication apparatus may perform the method in the fourth aspect. Functions of the communication apparatus may be implemented by hardware, or may be implemented by hardware executing corresponding software. The hardware or the software includes one or more units corresponding to the foregoing functions. The unit may be software and/or hardware. For operations performed by the communication apparatus and beneficial effect thereof, refer to the method in the fourth aspect and beneficial effect thereof. Repeated parts are not described again.

According to a ninth aspect, this application provides a computer-readable storage medium, where the computer-readable storage medium is configured to store computer executable instructions. When the computer executable instructions are executed, the method performed by the terminal device in the method in the first aspect is implemented; or the method performed by the first DU in the method in the second aspect is implemented; or the method performed by the CU in the method in the third aspect is implemented; or the method performed by the second DU in the method in the fourth aspect is implemented.

According to a tenth aspect, this application provides a computer program product including a computer program. When the computer program is executed, the method performed by the terminal device in the method in the first aspect is implemented; or the method performed by the first DU in the method in the second aspect is implemented; or the method performed by the CU in the method in the third aspect is implemented; or the method performed by the second DU in the method in the fourth aspect is implemented.

According to an eleventh aspect, this application provides a communication system. The communications system includes any one or more of a communication apparatus corresponding to the terminal device, a communication apparatus corresponding to the first DU, a communication apparatus corresponding to the CU, and a communication apparatus corresponding to the second DU.

### BRIEF DESCRIPTION OF DRAWINGS

FIG. 1 is a diagram of a system architecture according to this application;
FIG. 2a is a diagram of division of a CU and a DU based on a protocol layer of a wireless network according to this application;
FIG. 2b is a diagram of coupling between a CU and a DU according to this application;
FIG. 2c is a diagram of air interface protocol stack distribution of a CU and a DU according to this application;
FIG. 3 is a schematic flowchart of a handover method according to this application;
FIG. 4 is a schematic flowchart of another handover method according to this application;
FIG. 5 is a schematic flowchart of another handover method according to this application;
FIG. 6 is a schematic flowchart of another handover method according to this application;
FIG. 7 is a schematic flowchart of another handover method according to this application;
FIG. 8 is a schematic flowchart of another handover method according to this application;
FIG. 9 is a diagram of a structure of a communication apparatus according to this application; and
FIG. 10 is a diagram of a structure of another communication apparatus according to this application.

### DESCRIPTION OF EMBODIMENTS

The following further describes specific embodiments of this application in detail with reference to accompanying drawings.

In the specification, the claims, and the accompanying drawings of this application, the terms "first", "second", and the like are intended to distinguish between different objects but do not indicate a particular order. In addition, the terms "including", "having", and any other variant thereof are intended to cover a non-exclusive inclusion. For example, a procedure, a method, a system, a product, or a device that includes a series of steps or units is not limited to the listed steps or units, but optionally further includes an unlisted step or unit, or optionally further includes another inherent step or unit of the procedure, the method, the product, or the device.

"An embodiment" mentioned in the specification indicates that a particular characteristic, structure or feature described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate the following three cases: Only A exists, only B exists, and both A and B exist, where A and B may be singular or plural. A character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b c, "a and b", "a and c", "b and c", or "a, b, and c", where a, b, and c may be singular or plural.

To better understand embodiments of this application, the following first describes a system architecture in embodiments of this application.

The technical solutions in embodiments of this application may be applied to various communication systems, for example, a 4th generation (4th generation, 4G) communication system like a long term evolution (long term evolution, LTE) system, an LTE frequency division duplex (frequency division duplex, FDD) system, and an LTE time division duplex (time division duplex, TDD) system, a 5th generation (5th generation, 5G) communication system like a new radio (new radio, NR) system, or a communication system evolved after 5G like a 6th generation (6th generation, 6G) communication system.

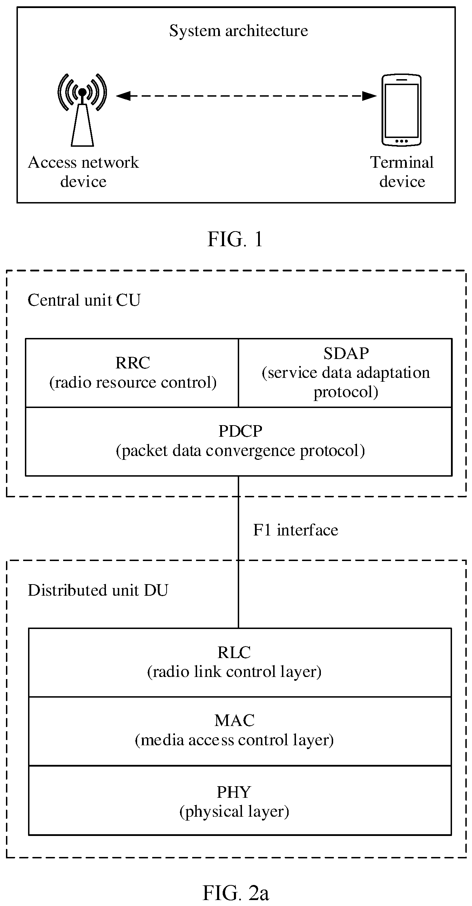

FIG. 1 is a diagram of a system architecture according to an embodiment of this application. The system architecture shown in FIG. 1 includes a terminal device and an access network device. The following describes in detail the terminal device and the access network device in the system architecture in FIG. 1.

### 1. Terminal device

The terminal device includes a device that provides voice and/or data connectivity for a user. For example, the terminal device is a device that has a wireless transceiver function, and may be deployed on land, including an indoor device or an outdoor device, a handheld device, a wearable device, or a vehicle-mounted device; or may be deployed on a water surface (for example, on a ship); or may be deployed in the air (for example, on an airplane, a balloon, or a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a mobile station, a remote station, a remote terminal, a mobile device, a wireless communication device, or the like. The terminal may alternatively be fixed or mobile. It may be understood that all or some of functions of the terminal in this application may alternatively be implemented by using a software function running on hardware, or may be implemented by using an instantiated virtualization function on a platform (for example, a cloud platform).

### 2. Access network device

The access network device (which may also be referred to as a network device) is a node or a device that connects the terminal device to a wireless network, and an interface between the access network device and the terminal device may be a Uu interface (or referred to as an air interface). Certainly, in the future communication, names of these interfaces may be unchanged, or may be replaced with other names. This is not limited in this application.

The access network device may be any device having a wireless transceiver function, including but not limited to: a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a home NodeB ((home evolved NodeB, HeNB) or (home NodeB, HNB)), a remote radio unit (remote radio unit, RRU), a baseband unit (baseBand unit, BBU), a transmission reception point (transmission reception point, TRP), a transmission point (transmission point, TP), a mobile switching center, a device that undertakes a base station function in device-to-device (Device-to-Device, D2D), vehicle-to-everything (vehicle-to-everything, V2X), and machine-to-machine (machine-to-machine, M2M) communication, and the like. The access network device may further include a network device in a non-terrestrial network (non-terrestrial network, NTN) communication system, that is, may be deployed on a high-altitude platform, a satellite, or the like.

### (1) Protocol layer structure

Communication between the access network device and the terminal device complies with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY layer). A user plane protocol layer structure may include a PDCP layer, an RLC layer, a MAC layer, and a physical layer. In a possible implementation, a service data adaptation protocol (service data adaptation protocol, SDAP) layer above the PDCP layer may be further included. The SDAP layer, the PDCP layer, the RLC layer, the MAC layer, and the physical layer may be collectively referred to as an access stratum.

In a possibility, a radio interface layer may be divided into three protocol layers: a physical layer (also referred to as L1), a data link layer (also referred to as L2), and a network layer (also referred to as L3). The L1 includes the PHY layer; the L2 includes the MAC layer, the RLC layer, a broadcast/multicast control (broadcast/multicast control, BMC) layer, and the PDCP layer; and the L3 includes the RRC layer in the access stratum, and mobility management (mobility management, MM) and call control (call control, CC) in a non-access stratum.

### (2) CU and DU

In embodiments of this application, the access network device may include one or more CUs and one or more DUs, and a plurality of DUs may be controlled by one CU in a centralized manner. For example, an interface between the CU and the DU may be referred to as an F1 interface. A control plane (control panel, CP) interface may be an F1-C interface, and a user plane (user panel, UP) interface may be an F1-U interface. Division may be performed for the CU and the DU based on protocol layers of a radio network. For example, as shown in FIG. 2a, functions of the PDCP layer and a protocol layer above the PDCP layer are set on the CU, and functions of protocol layers (for example, the RLC layer and the MAC layer) below the PDCP layer are set on the DU.

It may be understood that division of processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. In a design, some functions of the RLC layer and functions of protocol layers above the RLC layer are set on the CU, and remaining functions of the RLC layer and functions of protocol layers below the RLC layer are set on the DU. In another design, division of functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU. In another design, the CU may alternatively have one or more functions of a core network. For example, the CU may be set on a network side for ease of centralized management. The DU may have a plurality of radio frequency functions, or the radio frequency functions may be set remotely. This is not limited in embodiments of this application.

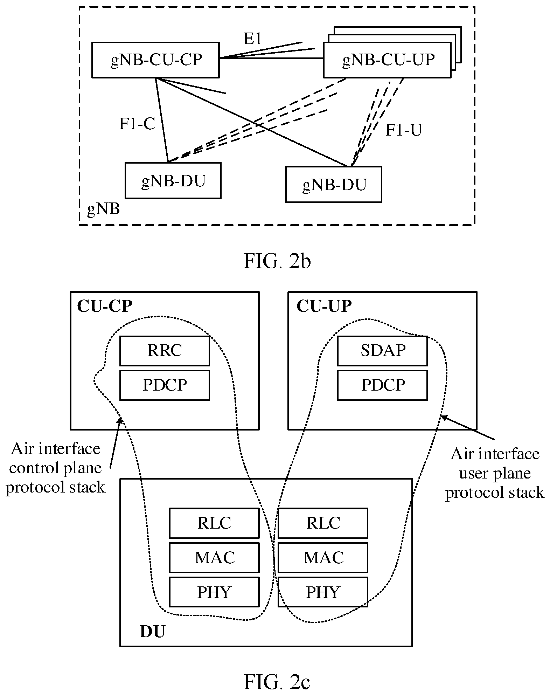

For example, the functions of the CU may be implemented by one entity, or may be implemented by different entities. For example, as shown in FIG. 2b, the functions of the CU may be further divided, to be specific, a control plane and a user plane are split, and are implemented by using different entities: a control plane CU entity (namely, a CU-CP entity) and a user plane CU entity (namely, a CU-UP entity). The CU-CP entity and the CU-UP entity may be coupled to the DU, to jointly complete the function of the access network device. An interface between the CU-CP entity and the CU-UP entity may be an E1 interface. An interface between the CU-CP entity and the DU may be an F1-C interface. An interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

Based on FIG. 2b, FIG. 2c is a diagram of air interface protocol stack distribution. As shown in FIG. 2c, for both a user plane and a control plane, an air interface protocol stack may be that an RLC layer, a MAC layer, and a PHY layer are on a DU, and a PDCP layer and protocol layers above the PDCP layer are on a CU.

It should be noted that in the architectures shown in FIG. 2a to FIG. 2c, signaling generated by the CU may be sent to a terminal device via the DU, or signaling generated by a terminal device may be sent to the CU via the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, it may also be considered that the signaling at the RRC layer or the PDCP layer is sent by the DU, or sent by the DU and a radio frequency apparatus.

It should be noted that quantities of terminal devices and access network devices in system architectures respectively corresponding to various communication scenarios in FIG. 1 are merely examples, and cannot be considered as specific limitations on the technical solutions of this application.

For ease of understanding content of this solution, the following further explains and describes some terms in embodiments of this application, to facilitate understanding by a person skilled in the art.

### 1. Carrier aggregation (Carrier Aggregation, CA)

The CA means that a terminal device may use a plurality of component carriers simultaneously. The component carrier is a carrier band that can be accessed by the terminal device. A carrier bandwidth of the component carrier ranges from 1.25 M to 20 M. Each carrier has a synchronization channel, a broadcast channel, and the like. Each component carrier may be considered as a cell and may support access of a user terminal. In addition, the plurality of component carriers may be located under a same access network node. Therefore, a quantity of cells under the same access network node increases sharply. For example, a maximum bandwidth of 100 M is required for an LTE R10 system, but a maximum bandwidth of an LTE R8 system is 20 M. Therefore, at least five component carriers need to be aggregated. In comparison with a single carrier under the same access network node, a quantity of cells increases by five times.

It may be understood that the CA means that the terminal device may access a plurality of cells, and the plurality of cells include one primary cell (primary cell, PCell) and at least one secondary cell (Secondary Cell, SCell). The PCell undertakes work such as security, handover, and uplink physical control channel carrying. The SCell undertakes only data transmission work, and security, handover, or the like is not related. For cell aggregation within a base station, there is only one PCell, which carries uplink physical control channels of all aggregated cells.

### 2. Smooth processing of measurement results

Generally, the terminal device periodically measures signal quality of a cell, to obtain a signal quality measurement result of the cell (including reference signal received power (reference signal received power, RSRP) or reference signal received quality (reference signal received quality, RSRQ) of the cell). In this application, performing smooth processing on the RSRP/RSRQ usually refers to weighting RSRP/RSRQ obtained through a plurality of times of measurement. For example, a measurement result, of a cell a, that is obtained through previous measurement is RSRP 1, and a measurement result, of the cell a, that is obtained through current measurement is RSRP 2. Performing smooth processing on the current measurement result is weighting the RSRP 1 and the RSRP 2, to obtain a target measurement result RSRP (for example, the target measurement result RSRP is a sum of 0.4 times the RSRP 1 and 0.6 times the RSRP 2).

### 3. Handover (handover, HO)

The HO means that the terminal device performs a handover from a source cell (Cell) to a target cell. A handover in which the source cell and the target cell belong to a same base station is an intra-base-station handover. A handover in which the source cell and the target cell belong to different base stations is an inter-base-station handover. The following uses an intra-base-station handover as an example for description.

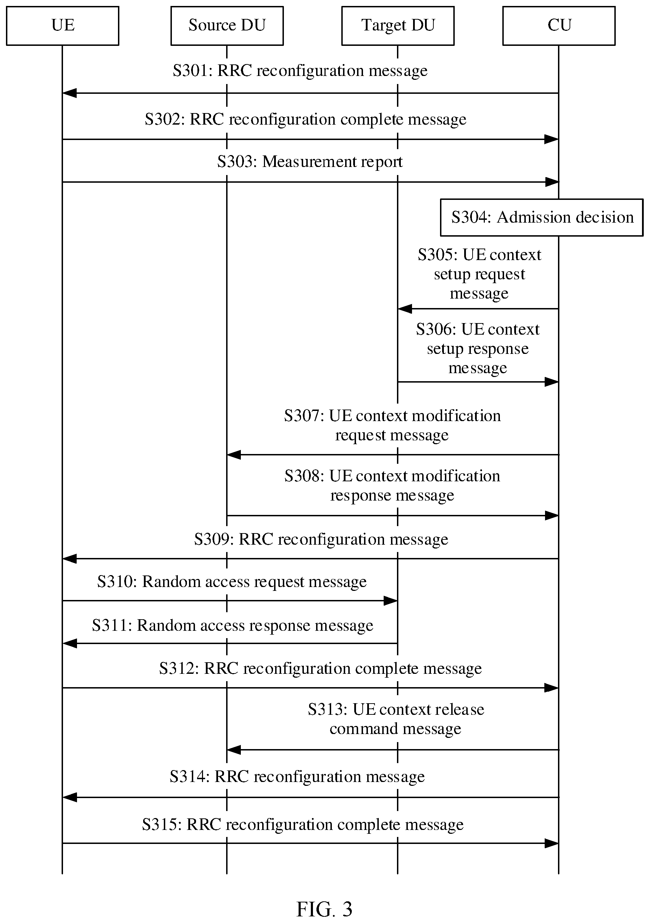

FIG. 3 is a schematic flowchart of an intra-base-station handover between a source cell and a target cell.

S301: A CU sends an RRC reconfiguration message (also referred to as an RRC Reconfiguration message) to UE.

Specifically, the CU sends the RRC reconfiguration message to a source DU, and the source DU sends the RRC reconfiguration message to the UE. The RRC reconfiguration message carries measurement control information corresponding to the source cell, and the measurement control information includes a measurement object, a measurement reporting configuration, and a generic access profile (generic access profile, GAP) configuration.

It should be noted that the measurement object includes at least one intra-frequency cell or at least one inter-frequency cell of a serving cell. The measurement reporting configuration refers to measurement reporting configuration information of each measurement object, for example, a configuration reporting standard, where the configuration reporting standard includes event-triggered reporting, periodic reporting, cell global identifier (cell global identifier, CGI) reporting, or space frequency transmit diversity (Space Frequency Transmit Diversity, SFTD) reporting. The GAP configuration includes but is not limited to a measurement gap length, a measurement gap repetition period, and the like.

S302: The UE sends an RRC reconfiguration complete message (namely, an RRC Reconfiguration Complete message) to the CU.

Specifically, the UE sends the RRC reconfiguration complete message to the source DU, and the source DU sends the RRC reconfiguration complete message to the CU.

S303: The UE sends a measurement report to the CU.

The UE measures the measurement object based on the measurement control information obtained in S301, and sends the measurement report to the source DU, so that the source DU sends the measurement report to the CU.

S304: The CU determines, based on a physical cell identifier (Physical Cell Identifier, PCI) carried in the measurement report, that the target cell and the serving cell (or referred to as the source cell) in the handover belong to a same base station, and the target cell makes a UE context admission decision based on a UE context transferred by the source cell.

The CU determines, based on the PCI in the measurement report, that a cell indicated by the PCI is the target cell. If the target cell and the source cell correspond to a same access network device, an intra-base-station handover procedure is started, and the target cell makes the admission decision based on the UE context transferred by the source cell.

S305: The CU sends a UE context setup request message (namely, a UE CONTEXT SETUP REQUEST message) to a target DU, where the UE context setup request message is used to request the target DU to allocate a user resource to the target cell. It should be noted that the user resource includes a radio resource of the target cell, a cell radio network temporary identifier (cell radio network temporary identifier, C-RNTI), a physical uplink control channel (physical uplink control channel, PUCCH) resource, and the like.

S306: After the target DU successfully allocates the user resource to the target cell, the target DU sends a UE context setup response message (namely, a UE CONTEXT SETUP RESPONSE message) to the CU.

S307: The CU sends a UE context modification request message (namely, a UE CONTEXT MODIFICATION REQUEST message) to the source DU, where the UE context modification request message is used to request the source DU to deliver an L2 scheduling stop indication for the source cell.

S308: The source DU sends a UE context modification response message (namely, a UE CONTEXT MODIFICATION RESPONSE message) to the CU.

S309: The CU sends an RRC reconfiguration message to the UE.

In other words, the CU sends the RRC reconfiguration message to the source DU, so that the source DU sends the RRC reconfiguration message to the UE. The RRC reconfiguration message carries a target frequency, the PCI of the target cell, and the cell radio network temporary identifier (Cell Radio Network Temporary Identifier, CRNTI) and a dedicated preamble (preamble) that are configured for the UE.

S310: The UE sends a non-contention-based random access request message (for example, MSG1) to the target DU corresponding to the target cell, where the random access request message carries the dedicated preamble.

S311: The target DU sends a random access response message (for example, MSG2) to the UE.

S312: The UE sends an RRC reconfiguration complete message to the CU.

The UE sends the RRC reconfiguration complete message to the target DU, and the target DU sends the RRC reconfiguration complete message to the CU. The RRC reconfiguration complete message indicates that the UE has accessed to the target cell.

S313: The CU sends a UE context release command message (namely, a UE context release command message) to the source DU, where the UE context release command message indicates the source cell of the source DU to release a context of the handed-over UE.

S314: The CU sends an RRC reconfiguration message (also referred to as an RRC Reconfiguration message) to the UE.

The CU sends the RRC reconfiguration message to the target DU, so that the target DU sends the RRC reconfiguration message to the UE, and when the candidate UE is handed over from the target cell, the candidate UE performs measurement based on the RRC reconfiguration message. The RRC reconfiguration message carries measurement control information corresponding to the target cell, and the measurement control information includes a measurement object, a measurement reporting configuration, and a generic access profile (Generic Access Profile, GAP) configuration.

S315: The UE sends an RRC reconfiguration complete message (namely, an RRC Reconfiguration Complete message) to the CU.

The UE sends the RRC reconfiguration complete message to the target DU, so that the target DU forwards the RRC reconfiguration complete message to the CU. It should be learned that, in a possible implementation, the target DU and the source DU may be a same DU, that is, the source cell and the target cell corresponds to the same DU.

Because the measurement report sent by the UE to the CU is layer 3 (also referred to as L3) signaling, the cell handover in FIG. 3 is also referred to as an L3 signaling-based handover. In the L3 signaling-based handover procedure shown in FIG. 3, after sending the measurement report, the UE further needs to perform steps S304 to S309 before initiating random access to the target cell to perform the cell handover. This takes long time, and causes a long interruption delay, so that a throughput of a communication system is reduced.

However, in a scenario in which a service requirement of a terminal device is high (for example, a service throughput is large, or a service has a requirement for a low delay), how to reduce an interruption delay of a cell handover and ensure a throughput of a communication system is an urgent problem to be resolved.

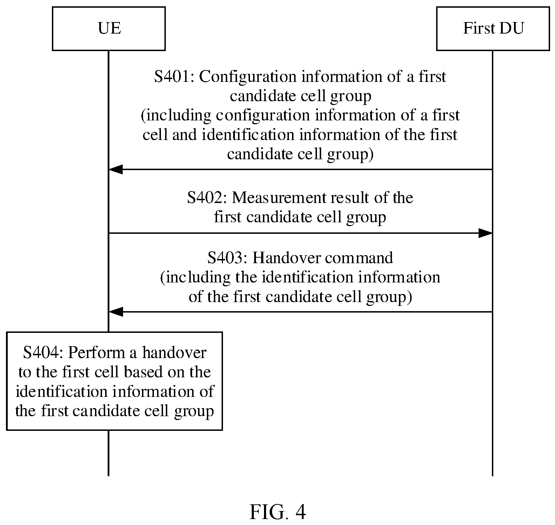

To reduce impact (for example, a long interruption delay or a reduced throughput) of the cell handover on the terminal device, FIG. 4 is a schematic flowchart of a handover method according to an embodiment of this application. As shown in FIG. 4, an example in which a source DU (referred to as a first DU in the following) corresponding to a source cell and a terminal device are execution bodies is used for description. It may be understood that the handover method may alternatively be performed by a chip in the first DU and a chip in the terminal device.

S401: The terminal device receives configuration information of a first candidate cell group from the first DU, where the configuration information of the first candidate cell group includes configuration information of a first cell and identification information of the first candidate cell group corresponding to the first cell.

It may be understood that the first DU sends an RRC reconfiguration message to the terminal device via a cell managed by the first DU. The RRC reconfiguration message includes configuration information of at least one candidate cell group. For example, the terminal device accesses a cell a (a primary cell) and a cell b (a secondary cell) that are managed by the first DU. Further, the first DU may send the RRC reconfiguration message to the terminal device via the cell a (or the cell b). The RRC reconfiguration message includes the configuration information of the at least one candidate cell group. For any candidate cell group (for example, the first candidate cell group) in the at least one candidate cell group, the candidate cell group includes a plurality of candidate cells (for example, the first candidate cell group includes the first cell), and configuration information of the candidate cell group includes identification information of the candidate cell group and configuration information of each candidate cell in the candidate cell group. The configuration information of the candidate cell includes one or more of the following information: RLC configuration information, MAC configuration information (for example, scheduling request (scheduling request, SR) configuration information, configured grant (configured grant, CG) configuration information, PUCCH configuration information, discontinuous reception (discontinuous reception, DRX) configuration information), and PHY configuration information (for example, search space configuration information, control resource set (CORESET) configuration information, and C-RNTI configuration information). In a possible implementation, different candidate cell groups in the at least one candidate cell group belong to different DUs, and these different DUs are different from the first DU.

For example, configuration information of three candidate cell groups sent by the first DU to the terminal device is shown in Table 1. One row of information in Table 1 is configuration information of one candidate cell group. For example, configuration information of a candidate cell group G1 includes identification information of the candidate cell group G1 and configuration information of candidate cells (namely, a cell 1 to a cell 3) in the candidate cell group G1.

**Table 1**

| Identification information of a candidate cell group | Candidate cells included in the candidate cell group | | |
|---|---|---|---|
| Candidate cell group G1 | Configuration information of a cell 1 (candidate primary cell) | Configuration information of a cell 2 (candidate secondary cell) | Configuration information of a cell 3 (candidate secondary cell) |
| Candidate cell group G2 | Configuration information of a cell 4 (candidate primary cell) | Configuration information of a cell 5 (candidate secondary cell) | - |
| Candidate cell group G3 | Configuration information of a cell 7 (candidate primary cell) | Configuration information of a cell 8 (candidate secondary cell) | Configuration information of a cell 9 (candidate secondary cell) |

In a possible implementation, the configuration information of the first candidate cell group further includes a first index, and the first index identifies the first cell in the first candidate cell group. It may be understood that the first cell has the first index in the first candidate cell group, and the first index may be understood as an identity of the first cell in the first candidate cell group.

In a possible implementation, different candidate cells may use a same index in different candidate cell groups. For example, an index of the cell 1 in the candidate cell group G1 may be 00, and an index of the cell 4 in the candidate cell group G2 may also be 00. In this case, a unique candidate cell may be determined based on an index of the candidate cell and identification information of a candidate cell group corresponding to the candidate cell. For example, the cell 1 in the candidate cell group G1 may be determined based on the identification information of the candidate cell group G1 and the index 00.

In a possible implementation, a bit corresponding to the first index of the first cell is smaller than (or understood as less than) a bit corresponding to a CGI of the first cell, or is smaller than a bit corresponding to a PCI of the first cell. When this possible implementation is implemented, an amount of data in a transmission procedure can be reduced, and the CGI of the cell is not exposed to the terminal device. This improves security of a communication system.

In a possible implementation, the configuration information of the first candidate cell group is encrypted.

In a possible implementation, the terminal device may further receive first indication information from the first DU, where the first indication information indicates consecutive handovers or a single handover. When the first indication information indicates consecutive handovers (also referred to as subsequent HOs), the configuration information of the first candidate cell group may be used for a plurality of handovers. When the first indication information indicates a single handover (also referred to as one shot HO), the configuration information of the first candidate cell group is applicable to only one handover (namely, a current handover). In a possible implementation, the configuration information of the first candidate cell group includes the first indication information.

It should be noted that the identification information of the candidate cell group mentioned in this application may be a candidate index (candidate index), and the candidate index is associated with configuration information of one candidate primary cell and configuration information of at least one candidate secondary cell.

S402: The terminal device sends a measurement result of the first candidate cell group to the first DU.

The terminal device measures a candidate cell included in the at least one candidate cell group, and sends a measurement result to the first DU. The following describes in detail content of the measurement result that is of the first candidate cell group and that is indicated by the terminal device in the following two cases.

### Case 1: The identification information of the first candidate cell group in the measurement result of the first candidate cell group

In other words, in Case 1, the candidate cell group (namely, the first candidate cell group) to which the first cell belongs is explicitly indicated by the identification information of the first candidate cell group.

In Implementation 1 of Case 1, the measurement result of the first candidate cell group is a measurement result of the first cell. In this implementation, in addition to the identification information of the first candidate cell group, if the measurement result of the first cell further includes the first index of the first cell in the first candidate cell group, the first cell is a cell corresponding to the first index in the first candidate cell group. Alternatively, in this implementation, if the measurement result of the first cell does not include the first index, it may be understood that the first cell is a primary cell in the first candidate cell group or a cell corresponding to a default index (for example, a minimum index value).

In Implementation 1 of Case 1, the measurement result of the first cell may further include RSRP or RSRQ of the first cell. It should be noted that the RSRP (or the RSRQ) of the first cell is not smoothed (that is, may be understood as unweighted RSRP/RSRQ). It may be understood that when the measurement result includes the RSRP (or the RSRQ) of the first cell, the first DU can clearly know cell signal quality of the first cell, so that a handover procedure of performing a handover to the first cell can be initiated in time, to ensure a service transmission requirement.

In Implementation 2 of Case 1, the measurement result of the first candidate cell group is obtained based on the measurement result of the first cell and a measurement result of a second cell, and the second cell also belongs to the first candidate cell group.

For example, the first candidate cell group includes a candidate primary cell (the cell 1) and candidate secondary cells (the cell 2 and the cell 3). In this case, the measurement result of the first candidate cell group may be obtained through calculation by using RSRP of the cell 1, RSRP of the cell 2, and RSRP of the cell 3 (for example, RSRP corresponding to the first candidate cell group is an average value of the RSRP of the cell 1, the RSRP of the cell 2, and the RSRP of the cell 3).

In Implementation 2 of Case 1, the measurement result of the first candidate cell group may further include the first index of the first cell and a second index of the second cell in the first candidate cell group.

### Case 2: The measurement result of the first candidate cell group does not include the identification information of the first candidate cell group.

In other words, in Case 2, the measurement result may implicitly indicate the candidate cell group to which the first cell belongs. For example, in a possible implementation, the terminal device receives indication information of a first resource from the first DU. Further, the terminal device sends the measurement result of the candidate cell in the first candidate cell group to the first DU via the first resource.

In Implementation 1 of Case 2, the measurement result of the first candidate cell group is the measurement result of the first cell, and the measurement result of the first cell includes the first index of the first cell in the first candidate cell group, and/or RSRP/RSRQ of the first cell.

In Example 1 of Implementation 1 of Case 2, there is an association relationship (or referred to as a correspondence) between the first resource and the first candidate cell group. In other words, the first DU allocates different resources to different candidate cell groups, and sends resource indication information to the CU. The CU includes the resource indication information in an RRC reconfiguration message, and sends the RRC reconfiguration message including the resource indication information to the first DU. Then, the first DU sends the RRC reconfiguration message including the resource indication information to the terminal device. It should be noted that measurement results of candidate cell groups are usually in a one-to-one correspondence with resources (which may also be understood as that resources used to transmit measurement results of different candidate cell groups are different). For example, a resource indication message carries indication information a and indication information b. The indication information a indicates that a resource used to transmit the measurement result of the first candidate cell group is the first resource, and the indication information b indicates that a resource used to transmit a measurement result of a second candidate cell group is a second resource. When the terminal device sends the measurement result of the cell in the first candidate cell to the first DU via the first resource, and the measurement result does not include the identification information of the first candidate cell group, the first DU may determine, based on the correspondence between the first resource and the first candidate cell group, the candidate cell group corresponding to the measurement result. In this case, if the measurement result of the first cell includes the first index, the first cell is a cell corresponding to the first index in the first candidate cell group; and if the measurement result of the first cell does not include the first index, it may be understood that the first cell is a primary cell in the first candidate cell group or a cell corresponding to a default index (for example, a minimum index value).

In Example 2 of Implementation 1 of Case 2, there is an association relationship (or referred to as a correspondence) between the first resource and the first cell in the first candidate cell group. In other words, when allocating, to each candidate cell group, a resource used to transmit a measurement result corresponding to the candidate cell group, the first DU further allocates, to candidate cells in the candidate cell group (for example, another DU different from the first DU), different resources (the resources may be cell-level resources or beam-level resources; and if the resources are beam-level resources, different resources need to be allocated to different downlink beams of the candidate cells) used to transmit measurement results corresponding to different candidate cells, and sends indication information of the resources corresponding to the candidate cells to the CU. The CU includes the indication information of the resources corresponding to the candidate cells in an RRC reconfiguration message, and then sends the RRC reconfiguration message to the terminal device. Further, when the terminal device sends the measurement result of the first cell to the first DU on the resource corresponding to the candidate cell (for example, the first resource corresponding to the first cell), the measurement result may not include the identification information of the first candidate cell group and the first index. The first DU may determine, based on the correspondence between the first resource and the first cell, the candidate cell group and the candidate cell that correspond to the measurement result.

For example, the candidate cell group G1 includes the cell 1 and the cell 2, and the candidate cell group G2 includes the cell 3 and the cell 4. The first DU respectively allocates the first resource and the second resource to the candidate cell group G1 and the candidate cell group G2. The first resource is used to transmit a measurement result corresponding to the candidate cell group G1, and the second resource is used to transmit a measurement result corresponding to the candidate cell group G2. In addition, the first DU further indicates that a resource 1 in the first resource is used to transmit a measurement result of the cell 1, a resource 2 in the first resource is used to transmit a measurement result of the cell 2, a resource 3 in the second resource is used to transmit a measurement result of the cell 3, and a resource 4 in the second resource is used to transmit a measurement result of the cell 4. In other words, in this case, the resource indication information in the RRC reconfiguration message received by the terminal device indicates correspondences between measurement results of the candidate cells and the resources. The correspondences are shown in Table 2.

**Table 2**

| Identifier of a candidate cell group | Identifier of a candidate cell | Resource identifier |
|---|---|---|
| Candidate cell group G1 | Cell 1 | Resource 1 in a first resource |
| | Cell 2 | Resource 2 in the first resource |
| Candidate cell group G2 | Cell 3 | Resource 3 in a second resource |
| | Cell 4 | Resource 4 in the second resource |

Further, when the terminal device sends the measurement result to the first DU via the resource 1 in the first resource, although the measurement result includes only the RSRP/RSRQ, after receiving the measurement result, the first DU may determine, based on the correspondence between the cell and the resource used to transmit the measurement result, that the cell corresponding to the measurement result is the cell 1 in the candidate cell group G1.

In Implementation 2 of Case 2, the measurement result of the first candidate cell group is obtained based on the measurement result of the first cell and a measurement result of a second cell, and the second cell belongs to the first candidate cell group.

In an example of Implementation 2 of Case 2, there is an association relationship (or referred to as a correspondence) between the first resource and the first candidate cell group. For example, the first candidate cell group includes a candidate primary cell (the cell 1) and candidate secondary cells (the cell 2 and the cell 3). A resource indication message carries indication information a and indication information b. The indication information a indicates that a resource used to transmit the measurement result of the first candidate cell group is the first resource, and the indication information b indicates that a resource used to transmit a measurement result of a second candidate cell group is a second resource. When the terminal device sends the measurement result of the first candidate cell group to the first DU via the first resource, the measurement result of the first candidate cell group is an average value of RSRP of the cell 1, RSRP of the cell 2, and RSRP of the cell 3. In this case, when the measurement result does not include the identification information of the first candidate cell group, the first DU may determine, based on the correspondence between the first resource and the first candidate cell group, the candidate cell group corresponding to the measurement result.

In Implementation 2 of Case 2, the measurement result of the first candidate cell group may further include the first index of the first cell and a second index of the second cell in the first candidate cell group.

In conclusion, the measurement result of the first candidate cell group may include one or more of the following information: the identification information of the first candidate cell group, the first index, or the RSRP/RSRQ of the first cell.

S403: The terminal device receives a handover command from the first DU. The handover command includes the identification information of the first candidate cell group.

In other words, the handover command indicates a cell group to which a serving cell corresponding to the terminal device belongs after the terminal device performs a cell handover based on the handover command. The handover command is layer 1 (also referred to as L1) signaling or layer 2 (also referred to as L2) signaling.

In an implementation corresponding to Implementation 2 of Case 1 or Implementation 2 of Case 2 in S402, when the first candidate cell group is different from a cell group of the terminal device before the handover, the handover command includes the identification information of the first candidate cell group, and the handover command indicates the terminal device to perform a handover to the first cell and a third cell in the first candidate cell group. The first cell is the primary cell in the first candidate cell group, and the third cell is a secondary cell in the first candidate cell group.

In other words, the terminal device sends the measurement result of the first candidate cell group to the first DU, and the measurement result of the first candidate cell group is obtained based on the measurement result of the first cell and the measurement result of the second cell (or referred to as the third cell) in the first candidate cell group. In this case, the first DU sends the handover command to the terminal device based on the measurement result of the first candidate cell. The handover command indicates the terminal device to perform the handover to the first cell and the third cell (or referred to as the second cell) in the first candidate cell group. In this case, the handover command may further include the first index of the first cell and the second index of the second cell (or referred to as the third cell) in the first candidate cell group.

In an implementation corresponding to Implementation 1 of Case 1 or Implementation 1 of Case 2 in S402, the handover command may further include the first index of the first cell in the first candidate cell group. In other words, in this implementation, the handover command indicates the terminal device to perform a handover to the cell (namely, the first cell) corresponding to the first index in the first candidate cell group.

In other words, the terminal device sends the measurement result of the first candidate cell group to the first DU, and the measurement result of the first candidate cell group is the measurement result of the first cell. In this case, the first DU sends the handover command to the terminal device based on the measurement result of the first candidate cell. The handover command indicates the terminal device to perform the handover to the first cell in the first candidate cell group.

It should be noted that the handover command is generated by the first DU, and does not require participation of the CU and a target DU.

S404: The terminal device performs the handover to the first cell based on the identification information of the first candidate cell group.

The terminal device sends, via the L1/L2 signaling, a handover acknowledgment message to a second DU corresponding to the first candidate cell group, to perform the handover to the first cell in the first candidate cell group. In a possible implementation, the handover acknowledgment message may include an identifier of the terminal device.

In an implementation corresponding to Implementation 2 of Case 1 or Implementation 2 of Case 2 in S402, when the first candidate cell group is different from the cell group of the terminal device before the handover, the handover command includes the identification information of the first candidate cell group. Further, the terminal device performs the handover to the first cell (namely, the primary cell in the first candidate cell group) and the third cell (namely, the secondary cell in the first candidate cell group) in the first candidate cell group based on the identification information of the first candidate cell group.

In an implementation corresponding to Implementation 1 of Case 1 or Implementation 1 of Case 2 in S402, in addition to the identification information of the first candidate cell group, the handover command further includes the first index of the first cell in the first candidate cell group. In this case, the terminal device determines the first candidate cell group based on the identification information of the first candidate cell group, and performs, based on the first index, the handover to the cell (namely, the first cell) corresponding to the first index in the first candidate cell group. In this case, if the first cell is the primary cell in the first candidate cell group, after the terminal device performs the handover to the first cell based on the identification information of the first candidate cell group, the terminal device may further add the candidate secondary cell in the first candidate cell group as a secondary cell, to complete a CA handover between cell groups.

Further, after performing the handover to the first cell, the terminal device performs, based on the configuration information of the first cell, data transmission (for example, PDCCH receiving or PDSCH receiving) via the first cell and the second DU corresponding to the first cell.

In conclusion, according to the handover method shown in FIG. 4, after the terminal device sends the measurement report to the source DU (namely, the first DU), the source DU may directly send, to the terminal device, the handover command that indicates the terminal device to perform the cell handover. In comparison with the manner in FIG. 3 in which after the terminal device sends the measurement report to the CU, the CU can send the handover command to the terminal device only after the CU requests a user resource from the target DU, this reduces operation steps between sending the measurement report by the terminal device and receiving the handover command by the terminal device, shortens the interruption delay (which may be understood as duration between sending the measurement report and receiving the handover command) in the cell handover procedure, and ensures the throughput of the communication system.

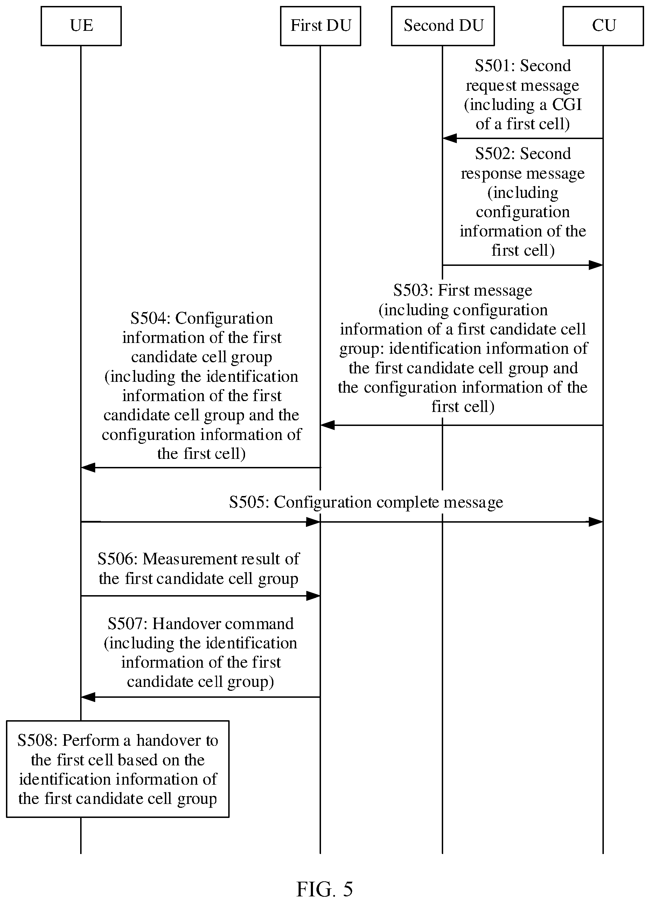

The following describes the handover method in FIG. 4 as a whole with reference to the CU and a target DU (referred to as a second DU in the following) corresponding to a target cell. FIG. 5 is a schematic flowchart of another handover method according to an embodiment of this application. As shown in FIG. 5, an example in which a source DU (referred to as a first DU in the following) corresponding to a source cell, a target DU (referred to as a second DU in the following) corresponding to a target cell (namely, a first cell), a terminal device, and a CU are execution bodies is used for description. It may be understood that the handover method may alternatively be performed by a chip in the first DU, a chip in the second DU, a chip in the terminal device, and a chip in the CU.

S501: The CU sends a second request message to the second DU, where the second request message is used to request to set up or modify a context for the terminal device, and the second request message includes a cell global identifier (cell global identifier, CGI) of a first cell.

The CU senses a service requirement of the terminal device (for example, senses a service type of data transmission that is being performed by the terminal device), and sends the second request message to the second DU based on the service requirement of the terminal device (for example, in a scenario in which the service requirement of the terminal device requires that a throughput of a communication system cannot decrease sharply). For example, the second request message is a CONTEXT SETUP REQUEST message (used to request the second DU to set up a context with the terminal device) or a CONTEXT MODIFICATION REQUEST message (used to modify a context between the second DU and the terminal device). The second request message includes the CGI of the first cell.

It should be understood that there may be a plurality of second DUs, and each second DU is a candidate DU (namely, a DU corresponding to a cell to which the terminal device may perform a handover). In this application, only the second DU corresponding to the target cell (that is, a cell to which the terminal device finally performs the handover) is used as an example for description. In other words, another second DU also needs to perform steps S501 and S502. There may also be a plurality of CGIs (that is, a quantity of candidate cells) in the second request message, and in this application, only an example in which the second request message includes the CGI of the target cell (that is, the first cell) is provided for description. In addition, the second DU may be the same as the first DU, or the second DU may be different from the first DU. When the second DU is the same as the first DU, the cell handover of the terminal device is an intra-base-station intra-DU cell handover. When the second DU is different from the first DU, the cell handover of the terminal device is an intra-base-station inter-DU cell handover.

For example, the CU separately sends the second request message to a DU 1 and a DU 2 other than the first DU. The second request message corresponding to the DU 1 includes the CGI of the cell 1 and a CGI of a cell 2 that are managed by the DU 1, and the second request message corresponding to the DU 2 includes a CGI of a cell 4 and a CGI of a cell 5 that are managed by the DU 2.

In a possible implementation, the second request message further includes an initiation indication of L1/L2 mobility, indicating that the context is currently requested to be set up for a purpose of the L1/L2 mobility. In other words, the second request message is used to request the second DU to set up the context for the terminal device, so that the terminal device subsequently performs an L1/L2 handover with the second DU.

In a possible implementation, the second request message further includes a first index of the first cell, and the first index identifies the first cell in a first candidate cell group corresponding to the second DU. A bit of the first index is smaller than a bit of the CGI of the first cell, or is smaller than a bit of a PCI of the first cell. In such a cell index allocation manner, in a subsequent handover, a cell may be identified by delivering an index of the cell to the terminal device, to avoid delivering a CGI of the cell to the terminal device. This avoids a security risk in the handover, and reduces resource overheads.

In a possible implementation, the second request message further includes identification information of the first candidate cell group. It should be understood that the identification information of the candidate cell group may be a candidate index, and the candidate index is associated with a candidate cell (or understood as configuration information of the candidate cell) indicated by the CGI in the second request.

S502: The CU receives a second response message from the second DU, where the second response message includes configuration information of the first cell.

The second DU determines whether the terminal device can perform the handover to candidate cells indicated by a plurality of CGIs (including the CGI of the first cell) in the second request message. For any candidate cell (for example, the first cell), if the second DU determines that the terminal device can subsequently perform the handover to the candidate cell, the second response message sent by the second DU to the CU includes configuration information of the candidate cell. Alternatively, if the second DU determines that the terminal device cannot subsequently perform the handover to the candidate cell, the second DU rejects to send the configuration information of the candidate cell to the CU, that is, the second response message does not include the configuration information of the candidate cell. The configuration information of the candidate cell includes one or more of the following information: RLC configuration information, MAC configuration information (for example, scheduling request (scheduling request, SR) configuration information, configured grant (configured grant, CG) configuration information, PUCCH configuration information, discontinuous reception (discontinuous reception, DRX) configuration information), or PHY configuration information (for example, search space configuration information, control resource set (CORESET) configuration information, and C-RNTI configuration information). In a possible implementation, if the second DU determines that the terminal device cannot subsequently perform the handover to the candidate cell, the second response message may further include an identifier of a candidate cell recommended by the second DU (that is, an identifier different from the identifier in the second request message). The identifier of the candidate cell recommended by the second DU is carried in the second request message when the CU subsequently sends the second request message to the second DU again.

For example, the CU sends the second request message to the DU 1, where the second request message includes CGIs of the cell 1 to a cell 3. If the DU 1 determines that the terminal device can subsequently perform the handover to the cell 1 and the cell 2, but cannot perform the handover to the cell 3, in this case, the second DU sends the second response message to the CU. The second response message includes CGIs (that is, the CGI of the cell 1 and the CGI of the cell 2) of cells that can be added as candidate cells of the terminal device and configuration information corresponding to the candidate cells (that is, the configuration information of the cell 1 and configuration information of the cell 2). In a possible implementation, the second response message further indicates a CGI of a cell that cannot be added as the candidate cell of the terminal device. For example, in this example, the second response message further indicates that the CGI of the cell that cannot be added as the candidate cell of the terminal device is the CGI of the cell 3.

The second response message may be a CONTEXT SETUP RESPONSE message or a CONTEXT MODIFICATION RESPONSE message. A manner in which the second DU determines whether the terminal device can subsequently perform the handover to the candidate cell may be: The second DU determines, based on information (for example, a cell load status) about the candidate cell, whether the terminal device can perform the handover to the candidate cell. For example, when load of the candidate cell is lower than or equal to a preset threshold, the second DU determines that the terminal device can perform the handover to the candidate cell; otherwise, the terminal device cannot perform the handover to the candidate cell. The preset threshold may be adaptively adjusted based on a specific application scenario. A specific value of the preset threshold is not specifically limited in this application.

S503: The CU sends a first message to the first DU, where the first message includes configuration information of the first candidate cell group, and the configuration information of the first candidate cell group includes the configuration information of the first cell and the identification information of the first candidate cell group.

The first message may be a downlink radio resource control message transfer (downlink radio resource control message transfer, DL RRC message transfer) message, the DL RRC message transfer message includes an RRC reconfiguration message, the RRC reconfiguration message includes the configuration information of the first candidate cell group, and the configuration information of the first candidate cell group includes the configuration information of the first cell and the identification information of the first candidate cell group.

In a possible implementation, the configuration information of the first candidate cell group is encrypted. For example, the CU encrypts the configuration information of the first candidate cell group by using a key (a key obtained through negotiation with the terminal device), so that after subsequently receiving the configuration information of the first candidate cell group, the terminal device may decrypt the configuration information of the first candidate cell group by using the key.

In a possible implementation, the second request message in S501 further includes consecutive handover indication information, where the consecutive handover indication information is used to request the configuration information of the first candidate cell group for a plurality of handovers. If the second DU agrees that the configuration information of the first candidate cell group is used for a plurality of handovers, the second response message in S502 further includes first indication information indicating consecutive handovers. Alternatively, if the second DU does not agree that the configuration information of the first candidate cell group is used for a plurality of handovers, the second response message in S502 further includes first indication information indicating a single handover; and the CU sends the first indication information to the first DU. The first indication information may be included in the first message (for example, the configuration information of the first candidate cell group further includes the first indication information).

In a possible implementation, the first message further includes the identification information of the first candidate cell group. It may be understood that the first message includes the RRC reconfiguration message and the identification information of the first candidate cell group. It should be noted that, the RRC reconfiguration message in the first message is not processed by the first DU. It may be understood that the first DU cannot sense content of the RRC reconfiguration message, and the first DU may subsequently forward the RRC reconfiguration message to the terminal device in S504. Therefore, the CU may indicate the identification information of the candidate cell group to the first DU, so that the first DU subsequently allocates a first resource to the candidate cell group, and the first resource is associated with the candidate cell group. It should be noted that an allocation occasion of an identifier of the first candidate cell group includes the following two cases.

Case 1: The second request message in S501 further includes the identification information of the first candidate cell group. It may be understood that before sending the second request message to the second DU, the CU determines (or allocates) identification information of a candidate cell group corresponding to the second DU (that is, the identification information of the first candidate cell group), and determines identification information of a plurality of cells (that is, a plurality of CGIs) corresponding to the candidate cell group corresponding to the second DU. Further, when the CU sends the second request message to the second DU, the CU indicates, to the second DU, the identification information of the candidate cell group corresponding to the second DU and the plurality of CGIs associated with (or referred to as corresponding to) the identification information of the candidate cell group. Further, after receiving the second response message from the second DU in S502, the CU associates the identification information of the candidate cell group with candidate cell configuration information included in the second response message, determines the RRC reconfiguration message, and sends, to the first DU, the first message including the RRC reconfiguration message.

Case 2: The second request message in S501 does not include the identification information of the first candidate cell group, but indicates CGIs of a plurality of candidate cells managed by the second DU. After or before receiving the response message in S502, the CU allocates the identification information of the first candidate cell group to the candidate cell corresponding to the second DU. Further, after receiving the second response message from the second DU in S502, the CU associates the identification information of the candidate cell group with candidate cell configuration information included in the second response message, determines the RRC reconfiguration message, and sends, to the first DU, the first message including the RRC reconfiguration message.

S504: The first DU sends the configuration information of the first candidate cell group to the terminal device, where the configuration information of the first candidate cell group includes the configuration information of the first cell and the identification information of the first candidate cell group.

For a specific implementation of step S504, refer to the foregoing descriptions of the embodiment manner of S401. Details are not described herein again.

S505: The terminal device sends a configuration complete message to the first DU, so that the first DU sends the configuration complete message to the CU. The configuration complete message indicates that the terminal device completes the configuration.

S506: The terminal device sends a measurement result of the first candidate cell group to the first DU.

S507: The terminal device receives a handover command from the first DU. The handover command includes the identification information of the first candidate cell group.

S508: The terminal device performs the handover to the first cell based on the identification information of the first candidate cell group.

For specific implementations of steps S506 to S508, refer to the foregoing descriptions of the implementations of S402 to S404. Details are not described herein again.

In conclusion, according to the handover method shown in FIG. 5, the CU may determine, based on a service requirement of the terminal device, that the terminal device subsequently performs a cell handover through L1/L2 signaling (that is, the terminal device sends the measurement report to the source DU), so that the CU requests a user resource of a target cell from the target DU in advance, and the source DU can directly send the handover command to the terminal device after receiving the measurement report from the terminal device. In comparison with the manner, in FIG. 3, in which after the terminal device sends the measurement report to the CU, the CU can send the handover command to the terminal device only after the CU requests the user resource from the target DU, this reduces operation steps between sending the measurement report by the terminal device and receiving the handover command by the terminal device, shortens an interruption delay in a cell handover procedure, and ensures a throughput of a communication system.

It should be noted that the handover method described in FIG. 4 or FIG. 5 may be applied to the following scenarios.

Scenario 1: A handover between cells in a same cell group. In other words, a serving cell of the terminal device before the handover and a serving cell of the terminal device after the handover are cells in a same cell group. Example 1: A cell group 1 includes a primary cell (a cell 1) and a plurality of secondary cells (a cell 2, a cell 3, and a cell 4). In this case, if a primary cell of a terminal device 1 before the handover is the cell 1 and secondary cells are the cell 2 and the cell 3, and the primary cell of the terminal device 1 after the handover is the cell 1 and the secondary cells are the cell 3 and the cell 4, it may be understood that the terminal device 1 performs the handover in a same cell group. Example 2: A cell group 2 includes a cell 5 to a cell 8, and each of the cell 5 to the cell 8 may all be used as a primary cell of a terminal device 2, or may all be used as a secondary cell of the terminal device 2. In this case, if the primary cell of the terminal device 2 before the handover is the cell 5 and the secondary cells are the cell 6 and the cell 7, and the primary cell of the terminal device 2 after the handover is the cell 8 and the secondary cells are the cell 6 and the cell 7, it may be understood that the terminal device 2 performs the handover in a same cell group.

Scenario 2: A cell handover between different cell groups (cell groups managed by different DUs) (which may be referred to as an inter-group handover for short) may be understood as a scenario in which a primary cell and a secondary cell that are managed by a first DU are handed over to a primary cell and a secondary cell that are managed by a second DU. For example, a cell group 1 includes a primary cell (a cell 1) and a plurality of secondary cells (a cell 2, a cell 3, and a cell 4), a cell group 2 includes a cell 5 to a cell 8, and each of the cell 5 to the cell 8 may be used as a primary cell of a terminal device 2, or may be used as a secondary cell of the terminal device 2. In this case, if a primary cell of a terminal device 1 before the handover is the cell 5 and secondary cells are the cell 6 and the cell 7, and the primary cell of the terminal device 1 after the handover is the cell 1 and the secondary cells are the cell 3 and the cell 4, it may be understood that the terminal device 1 performs the handover between different cell groups. It may be understood that, if configuration information of a cell in a cell group is sufficient to support the terminal device to perform data transmission before and after the handover, it may be considered as an intra-group handover. If configuration information of a cell in a cell group is insufficient to support the terminal device to perform data transmission before and after the handover, that is, the terminal device needs configuration information of a new cell, an inter-group handover is required.

Scenario 3: A cell handover from a single cell to a cell group (which may also be a CA cell group). For example, a cell group 1 includes a primary cell (a cell 1) and a plurality of secondary cells (a cell 2, a cell 3, and a cell 4). In this case, if a terminal device 3 accesses only one cell (namely, a cell 10) before the handover, and the terminal device 3 accesses the cell group 1 after the handover, that is, the terminal device 3 accesses a plurality of cells after completing the handover: the cell 1 (the primary cell) and the cell 3 (the secondary cell), it may be understood that the terminal device 1 performs the handover from the single cell to the cell group.

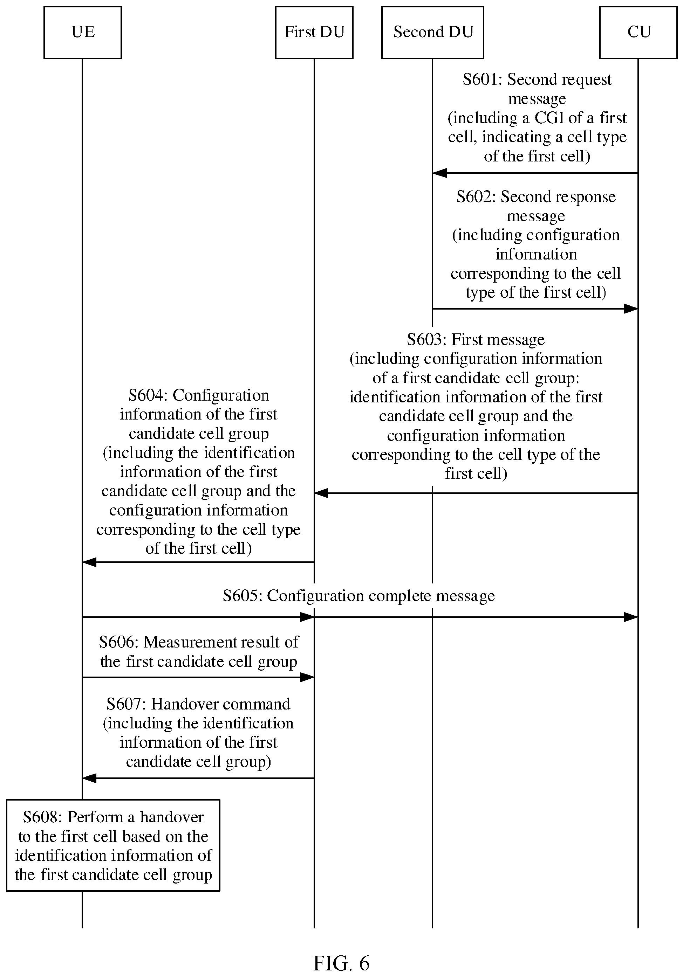

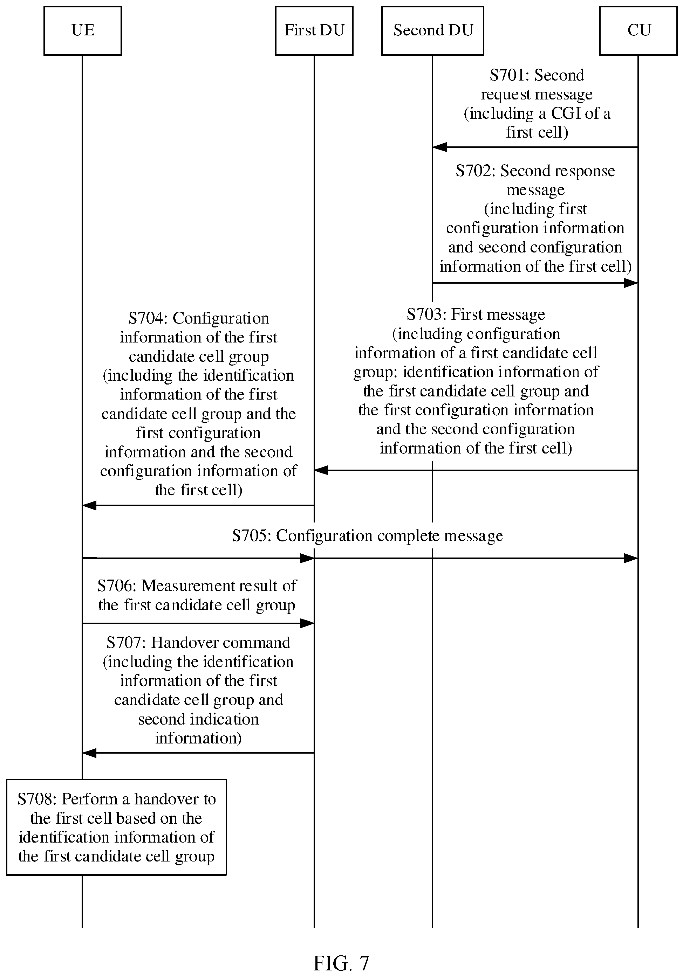

With reference to FIG. 6 and FIG. 7, the following describes in detail how to determine a cell type of the target cell (that is, determine the first cell as the primary cell or the secondary cell) when the terminal device connected to a plurality of cells performs the cell handover.

In a procedure of a handover method shown in FIG. 6, the CU indicates the cell type of the candidate cell in a preparation phase of the cell handover. FIG. 6 is a schematic flowchart of another handover method according to an embodiment of this application. As shown in FIG. 6, an example in which a source DU (referred to as a first DU in the following) corresponding to a source cell, a target DU (referred to as a second DU in the following) corresponding to a target cell, a terminal device, and a CU are execution bodies is used for description. It may be understood that the handover method may alternatively be performed by a chip in the first DU, a chip in the second DU, a chip in the terminal device, and a chip in the CU.

S601: The CU sends a second request message to the second DU, where the second request message is used to request to set up or modify a context for the terminal device, the second request message includes a CGI of a first cell, the second request message further indicates a cell type of the first cell, and the cell type of the first cell is a candidate primary cell or a candidate secondary cell.

In other words, based on S501, the second request information further indicates the cell type of the first cell. In other words, when the second request message includes the CGI of the first cell and indicates that the first cell is the candidate primary cell, it may be understood that the second request message is used to request the second DU to allocate a user resource used when the first cell is a primary cell. When the second request message includes the CGI of the first cell and indicates that the first cell is the candidate secondary cell, it may be understood that the second request message is used to request the second DU to allocate a user resource used when the first cell is a secondary cell.

For example, the CU sends the second request message to the second DU, where the second request message includes a CGI of one candidate primary cell, a CGI of at least one first candidate secondary cell, and a CGI of at least one second candidate secondary cell. The first candidate secondary cell is used for an initial secondary cell handover, and the second candidate secondary cell is used for a plurality of secondary cell handovers.

For example, the CGIs of the candidate cells and a cell type of each candidate cell in the second request message are shown in Table 3.

**Table 3**

| Candidate primary cell | First candidate secondary cell | Second candidate secondary cell |
|---|---|---|
| CGI 1 | CGI 2 | CGI 5 |
| | CGI 3 | CGI 6 |
| | CGI 4 | CGI 7 |

It should be noted that, that the first candidate secondary cell is used for the initial secondary cell handover may be understood as that when the terminal device accesses a first candidate cell group for a first time, the terminal device is connected to a candidate primary cell in the first candidate cell group and is connected to the first candidate secondary cell. That the second candidate secondary cell is used for a plurality of secondary cell handovers may be understood as that after the terminal device accesses the first candidate secondary cell, if the terminal device detects that signal quality (for example, RSRP/RSRQ) of the second candidate secondary cell is better than that of the first candidate secondary cell, the terminal device may perform a secondary cell handover in the first candidate cell group, that is, perform a handover from the first candidate secondary cell to the second candidate secondary cell. For example, the first candidate cell group includes a cell c (the candidate primary cell), a cell d (the first candidate secondary cell), and a cell f (the second candidate secondary cell). After S601 to S608 are performed, the terminal device accesses the first candidate cell group for the first time, and is connected to the cell c and the cell d (that is, performs data transmission via the cell c and the cell d). Then, if the terminal device detects, through measurement, that signal quality of the cell f is better than that of the cell d, the terminal device sends a measurement result to the second DU corresponding to the first candidate cell group. The measurement result is a measurement result of the cell f (for example, includes an index of the cell f and the signal quality of the cell f). After receiving the measurement result, the second DU sends a handover command (L1/L2 signaling) to the terminal device. The handover command includes identification information of the first candidate cell group and the index of the cell f, and the handover command indicates the terminal device to perform a handover to the cell f. The terminal device sends a handover acknowledgment message to the second DU based on the handover command, to perform the handover to the cell f (namely, the second candidate secondary cell) in the first candidate cell group. The cell handover in this case belongs to the cell handover in the cell group in the foregoing scenario 1. After the handover is completed, the terminal device performs data transmission via the cell c and the cell f.

S602: The CU receives a second response message from the second DU, where the second response message includes configuration information corresponding to the cell type of the first cell.

In other words, based on the second response message in S502, the configuration information of the first cell included in the second response message corresponds to the cell type of the first cell. In other words, when the second request message includes the CGI of the first cell and indicates that the first cell is the candidate primary cell, if the second DU determines that the terminal device can subsequently perform the handover to the first cell, and the first cell may be used as a primary cell of the terminal device, the second response message includes first configuration information of the first cell serving as the primary cell. The first configuration information includes but is not limited to one or more of the following configuration information: RLC configuration information, MAC configuration information (for example, scheduling request (scheduling request, SR) configuration information, configured grant (configured grant, CG) configuration information, PUCCH configuration information, discontinuous reception (discontinuous reception, DRX) configuration information), and PHY configuration information (for example, search space configuration information, control resource set (CORESET) configuration information, and C-RNTI configuration information) that correspond to the first cell. When the second request message includes the CGI of the first cell and indicates that the first cell is the candidate secondary cell, if the second DU determines that the terminal device can subsequently perform the handover to the first cell, and the first cell may be used as a secondary cell of the terminal device, the second response message includes second configuration information of the first cell serving as the secondary cell. The second configuration information includes RLC configuration information, PHY configuration information, or the like, and the second configuration information does not include a PUCCH configuration in the first configuration information.

For example, the CU sends the second request message to the second DU, where the second request message includes CGIs (namely, a CGI 1 to a CGI 7) corresponding to a candidate cell group, and the second request message further indicates cell types of the CGI 1 to the CGI 7. The CGI 1 is a candidate primary cell in the candidate cell group, the CGI 2 and the CGI 3 are first candidate secondary cells in the candidate cell group, and the CGI 4 to the CGI 7 are second candidate secondary cells in the candidate cell group. Further, for a CGI in the second request message, the second DU determines whether a cell indicated by the CGI can be subsequently used as the cell type indicated in the second request message to provide a service for the terminal device. If the cell indicated by the CGI can subsequently be used as the cell type indicated in the second request message to provide the service for the terminal device, the second DU allocates, to the cell corresponding to the CGI, the configuration information corresponding to the cell type indicated in the second request message; otherwise, the second DU notifies the CU that the cell corresponding to the CGI cannot be added as the candidate secondary cell. If the second DU determines that a cell indicated by the CGI 4 cannot be subsequently used as the secondary cell to provide a service for the terminal device, and cells indicated by other CGIs (the CGI 1 to the CGI 3 and the CGI 5 to the CGI 7) can provide, for the terminal device, a service corresponding to the cell type indicated in the second request message, configuration information of the candidate cells included in the second response message is shown in Table 4.

**Table 4**

| Cell type | CGI of a candidate cell | Configuration information of a cell |
|---|---|---|
| Candidate primary cell | CGI 1 | Configuration information 1 of the CGI 1 serving as the primary cell |
| First candidate secondary cell | CGI 2 | Configuration information 2 of the CGI 2 serving as the secondary cell |
| | CGI 3 | Configuration information 3 of the CGI 3 serving as the secondary cell |
| Second candidate secondary cell | CGI 5 | Configuration information of the CGI 5 serving as the secondary cell |
| | CGI 6 | Configuration information of the CGI 6 serving as the secondary cell |
| | CGI 7 | Configuration information of the CGI 7 serving as the secondary cell |
| Candidate cell that cannot be added | CGI 4 | - |

S603: The CU sends a first message to the first DU, where the first message includes configuration information of the first candidate cell group, and the configuration information of the first candidate cell group includes the identification information of the first candidate cell group and the configuration information corresponding to the cell type of the first cell.

In other words, after receiving the second response message sent by the second DU, the CU sends the first message to the first DU. The first message indicates the configuration information of the first candidate cell group, the configuration of the first candidate cell group includes the identification information of the first candidate cell group and the configuration information of the first cell, and the configuration information of the first cell corresponds to the cell type that is of the first cell and that is indicated in the second request message. In other words, based on S503, the first message further indicates the cell type of the first cell while indicating the configuration information of the first cell.

It may be understood that, the configuration information of the first candidate cell group in the first message includes configuration information of one candidate primary cell and configuration information of at least one first candidate secondary cell. Alternatively, the configuration information of the first candidate cell group includes configuration information of one candidate primary cell, configuration information of at least one first candidate secondary cell, and configuration information of at least one second candidate secondary cell. The first cell may be a candidate primary cell, a first candidate secondary cell, or a second candidate secondary cell in the first candidate cell group.

In a possible implementation, the second request message in S601 further includes indication information for a plurality of handovers, and the indication information is used to request the second DU to allocate configuration information that is of the candidate primary cell and that is used for the plurality of handovers. In S602, the second response message sent by the second DU to the CU further indicates configuration information that is of the candidate primary cell and that can be used for the plurality of handovers. Further, the first message further includes first indication information, and the first indication information indicates that a primary cell handover mode is a multi-handover mode or a single-handover mode. When the first indication information indicates that the handover mode is the multi-handover mode, after receiving the configuration information of the cell corresponding to the CGI, the terminal device stores the configuration information of the cell corresponding to the CGI, so that the configuration information can be used for a plurality of times in a subsequent handover procedure. When the first indication information indicates that the handover mode is the single-handover mode, the terminal device deletes the configuration information of the cell corresponding to the CGI after completing the current handover. In other words, before each handover, the second DU needs to re-deliver the configuration information of the candidate primary cell.

S604: The first DU sends the configuration information of the first candidate cell group to the terminal device, where the configuration information of the first candidate cell group includes the configuration information (corresponding to the cell type that is of the first cell and that is indicated in the second request message) of the first cell and the identification information of the first candidate cell group.

For a specific implementation of step S604, refer to the foregoing descriptions of the embodiment of S401. Details are not described herein again. A difference between step S604 and step S401 lies in that the configuration information of the first cell corresponds to the cell type that is of the first cell and that is indicated in the second request message.

S605: The terminal device sends a configuration complete message to the first DU, so that the first DU sends the configuration complete message to the CU. The configuration complete message indicates that the terminal device completes the configuration.

S606: The terminal device sends a measurement result of the first candidate cell group to the first DU.

S607: The terminal device receives a handover command from the first DU. The handover command includes the identification information of the first candidate cell group.

S608: The terminal device performs the handover to the first cell based on the identification information of the first candidate cell group.

For specific implementations of S606 to S608, refer to the descriptions of the specific implementations of S402 to S404. After performing the handover to the first cell, the terminal device performs communication based on the configuration information of the first cell.

In conclusion, according to the handover method shown in FIG. 6, when requesting the second DU to set up the context connection of the terminal device, the CU indicates cell types of the candidate cells. Therefore, based on the handover method shown in FIG. 5, the terminal device can further perform a primary cell handover and/or a secondary cell handover in the cell handover procedure, to meet a service requirement and ensure the throughput of the communication system.

In the procedure of the handover method shown in FIG. 7, the CU indicates the cell type of the candidate cell in an execution phase of the cell handover. FIG. 7 is a schematic flowchart of another handover method according to an embodiment of this application. As shown in FIG. 7, an example in which a source DU (referred to as a first DU in the following) corresponding to a source cell, a target DU (referred to as a second DU in the following) corresponding to a target cell, a terminal device, and a CU are execution bodies is used for description. It may be understood that the handover method may alternatively be performed by a chip in the first DU, a chip in the second DU, a chip in the terminal device, and a chip in the CU.

S701: The CU sends a second request message to the second DU, where the second request message is used to request to set up or modify a context for the terminal device, and the second request message includes a CGI of a first cell.

For a specific implementation of S701, refer to the descriptions of the specific implementation of S501.

S702: The CU receives a second response message from the second DU, where the second response message includes first configuration information of the first cell serving as a candidate primary cell and second configuration information of the first cell serving as a candidate secondary cell.

In other words, based on the second response message in S502, the second response message includes two types of configuration information of the first cell: the first configuration information of the first cell serving as the primary cell and the second configuration information of the first cell serving as the secondary cell. In other words, the second request message includes the CGI of the first cell, but does not indicate a cell type of the first cell. In this case, if the second DU determines that the terminal device can subsequently perform the handover to the first cell, the second response message includes both the first configuration information of the first cell serving as the primary cell and the second configuration information of the first cell serving as the candidate secondary cell. For explanations of the first configuration information and the second configuration information, refer to related descriptions in S602.

For example, the CU sends the second request message to the second DU, where the second request message includes CGIs (a CGI 1 to a CGI 3) corresponding to a candidate cell group. Further, for a CGI in the second request message, the second DU determines whether a cell indicated by the CGI can subsequently provide a service for the terminal device. If the cell indicated by the CGI can subsequently provide a service for the terminal device, the second DU configures two pieces of configuration information (the first configuration information and the second configuration information) of the cell for the terminal device. Otherwise, the second DU does not configure the configuration information of the cell for the terminal device, and may further notify the CU that the cell corresponding to the CGI cannot be added as a candidate cell. If the second DU determines that a cell indicated by the CGI 3 cannot be subsequently used as a secondary cell to provide a service for the terminal device, and a cell indicated by another CGI (the CGI 1 and the CGI 2) can provide a service for the terminal device, configuration information of candidate cells included in the second response message is shown in Table 5.

**Table 5**

| CGI of a candidate cell | Configuration information of a cell |
|---|---|
| CGI 1 | Configuration information of the CGI 1 serving as a candidate primary cell |
| | Configuration information of the CGI 1 serving as a candidate secondary cell |
| CGI 2 | Configuration information of the CGI 2 serving as the candidate primary cell |
| | Configuration information of the CGI 2 serving as the candidate secondary cell |

S703: The CU sends a first message to the first DU, where the first message includes configuration information of a first candidate cell group, and the configuration information of the first candidate cell group includes identification information of the first candidate cell group, the first configuration information of the first cell, and the second configuration information of the first cell.

**In** other words, after receiving the second response message sent by the second DU, the CU sends the first message to the first DU. The first message indicates the configuration information of the first candidate cell group, the configuration information of the first candidate cell group includes the identification information of the first candidate cell group and the configuration information of the first cell, and the configuration information of the first cell includes the first configuration information and the second configuration information of the first cell. **In** other words, based on S503, the first message not only indicates the first configuration information of the first cell serving as the primary cell, but also indicates the second configuration information of the first cell serving as the secondary cell.

S704: The first DU sends the configuration information of the first candidate cell group to the terminal device, where the configuration information of the first candidate cell group includes the first configuration information of the first cell, the second configuration information of the first cell, and the identification information of the first candidate cell group.

For a specific implementation of S704, refer to the descriptions of the embodiment manner of S401. Details are not described herein again. A difference between S704 and S401 lies in that the configuration information of the first cell is the first configuration information and the second configuration information of the first cell.

S705: The terminal device sends a configuration complete message to the first DU, so that the first DU sends the configuration complete message to the CU. The configuration complete message indicates that the terminal device completes the configuration.

S706: The terminal device sends a measurement result of the first candidate cell group to the first DU.

For a specific implementation of S706, refer to the descriptions of the specific implementation of S402.

S707: The terminal device receives a handover command from the first DU. The handover command includes the identification information of the first candidate cell group and second indication information, and the second indication information indicates that the first cell is the primary cell or the secondary cell.

For a specific implementation of S707, refer to the descriptions of the embodiment manner of S403. Details are not described herein again. In a possible implementation, a difference between S707 and S403 lies in that the handover command further includes the second indication information, and the second indication information indicates that the first cell is the primary cell or the secondary cell.

S708: The terminal device performs the handover to the first cell based on the identification information of the first candidate cell group.

For a specific implementation of S708, refer to the descriptions of the embodiment manner of S404. Details are not described herein again. A difference between S708 and S404 lies in that after performing the handover to the first cell based on the handover command, the terminal device performs communication based on configuration information corresponding to a cell type (the primary cell or the secondary cell) that is of the first cell and that is indicated by the handover command. In other words, if the second indication information in the handover command indicates that the first cell is the primary cell, the terminal device performs communication based on the first configuration information of the first cell after performing the handover to the first cell; or if the second indication information in the handover command indicates that the first cell is the secondary cell, the terminal device performs communication based on the second configuration information of the first cell after performing the handover to the first cell.

In conclusion, according to the handover method shown in FIG. 7, when sending the handover command to the terminal device, the first DU indicates a cell type of the target cell. Therefore, based on the handover method shown in FIG. 5, the terminal device can further perform the primary cell handover and/or the secondary cell handover in the cell handover procedure, to meet a service requirement and ensure the throughput of the communication system.

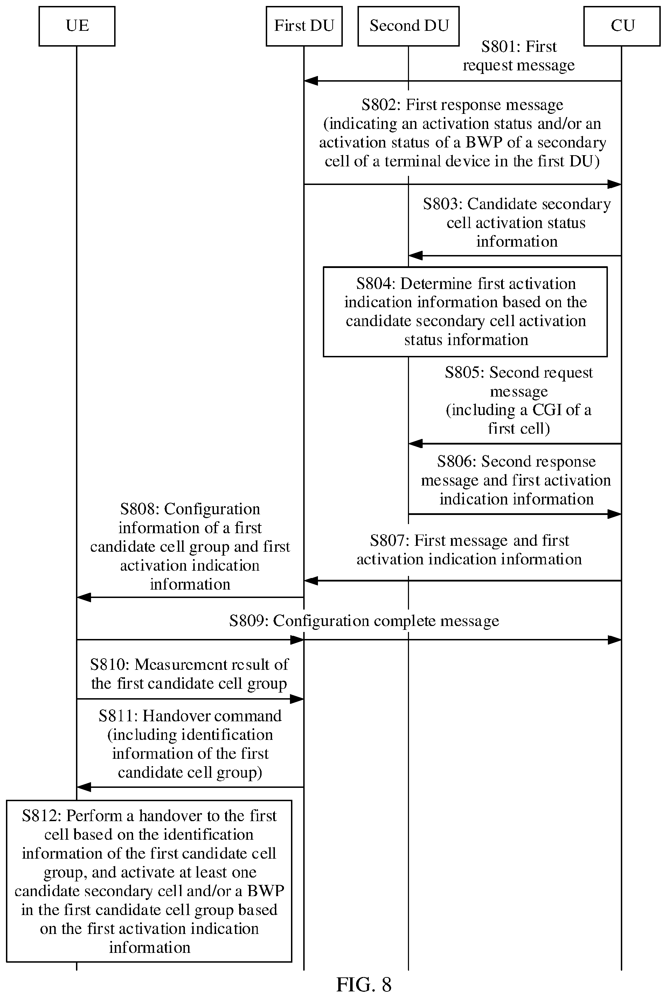

In addition to indicating the cell type of the target cell in the cell handover procedure by using the method in FIG. 6 or FIG. 7, fast CA activation may be performed by using the handover method shown in FIG. 8, to avoid a throughput decrease. FIG. 8 is a schematic flowchart of another handover method according to an embodiment of this application. As shown in FIG. 8, an example in which a source DU (referred to as a first DU in the following) corresponding to a source cell, a target DU (referred to as a second DU in the following) corresponding to a target cell, a terminal device, and a CU are execution bodies is used for description. It may be understood that the handover method may alternatively be performed by a chip in the first DU, a chip in the second DU, a chip in the terminal device, and a chip in the CU.

S801: The CU sends a first request message to the first DU, where the first request message is used to obtain an activation status and/or an activation status of a bandwidth part (bandwidth part, BWP) of a secondary cell of the terminal device in the first DU.

It may be understood that for different terminal devices, activation statuses and/or activation statuses of the BWP of the secondary cell in the first DU are different. The first DU may send an activation command to the terminal device based on a service requirement (for example, a throughput requirement) of each terminal device. The activation command is used to activate, for the terminal device, the secondary cell managed by the first DU, so that the terminal device accesses more cells or a quantity of BWPs on which the terminal device can perform data transmission increases. This improves a service throughput of the terminal device.

It should be noted that one secondary cell corresponds to a plurality of BWPs. For different terminal devices connected to a cell managed by a same DU, the activation statuses and/or the statuses of the BWP of the secondary cell in the first DU may also be different. For example, cells managed by the first DU include a PCell, an SCell 1, and an SCell 2, where the SCell 1 corresponds to a BWP 1 and a BWP 2, and all terminal devices 1 to 3 access the PCell managed by the first DU. For the terminal device 1 to the terminal device 3, activation statuses and activation statuses of BWPs of the secondary cells in the first DU are shown in Table 6.

**Table 6**

| Identifier of a terminal device | Status of an SCell 1 | Status of an SCell 2 |
|---|---|---|
| Terminal device 1 | The SCell 1 is in an active state, a BWP 1 is in the active state, and a BWP 2 is in an inactive state. | The SCell 2 is in the inactive state. |
| Terminal device 2 | The SCell 1 is in the inactive state. | The SCell 2 is in the active state. |
| Terminal device 3 | The SCell 1 is in the active state, the BWP 1 is in the inactive state, and the BWP 2 is in the active state. | The SCell 2 is in the inactive state. |

S802: The first DU sends a first response message to the CU, where the first response message indicates the activation status and/or the activation status of the BWP of the secondary cell of the terminal device in the first DU.

The first response message includes one or more of the following information: a quantity of secondary cells in the active state (or a quantity of secondary cells in the inactive state) that correspond to the terminal device and that are in the first DU, CGIs of the secondary cells in the active state (or CGIs of the secondary cells in the inactive state) that correspond to the terminal device and that are in the first DU, and a quantity of active BWPs (or a quantity of inactive BWPs) of the secondary cells in the active state of the terminal device in the first DU, or identifiers of active BWPs (or identifiers of inactive BWPs) of the secondary cells in the active state of the terminal device in the first DU.

For example, if activation statuses and/or activation statuses of the BWPs of the secondary cells of the terminal device 1 in the first DU are shown in Table 6, the first DU sends the first response message to the CU. The first response message may indicate that there is one secondary cell in the active state of the terminal device 1 in the first DU and the secondary cell in the active state has one active BWP.

S803: The CU sends candidate secondary cell activation status information to the second DU, where the secondary cell candidate activation status information is determined based on the first response message.

In other words, the CU determines the candidate secondary cell activation status information based on the activation status and/or the activation status of the BWP, indicated by the first response message, of the secondary cell of the terminal device in the first DU. The candidate secondary cell activation status information may be the activation status and/or the activation status of the BWP of the secondary cell of the terminal device in the first DU. Alternatively, the candidate secondary cell activation status information may be an indicated quantity of secondary cells in the active state and/or an indicated quantity of BWPs in the active state of the terminal device in the second DU.

It should be noted that the activation status of the secondary cell is one of the active state of the secondary cell or the inactive state of the secondary cell, and the activation status of the BWP is one of the active state of the BWP or the inactive state of BWP.

S804: The second DU determines first activation indication information based on the candidate secondary cell activation status information, where the first activation indication information indicates an initial status and/or an initial status of a BWP of at least one candidate secondary cell in a candidate cell group corresponding to the second DU, and the initial status includes an active state or an inactive state.

In other words, the second DU determines a quantity of candidate secondary cells in the active state (or a quantity of candidate secondary cells in the inactive state) in the candidate cell group of the terminal device, CGIs of the candidate secondary cells in the active state (or CGIs of the candidate secondary cells in the inactive state) of the terminal device in the second DU, and a quantity of active BWPs (or a quantity of inactive BWPs) of the candidate secondary cells in the active state of the terminal device in the second DU or identifiers of active BWPs (or identifiers of inactive BWPs) of the candidate secondary cells in the active state of the terminal device in the second DU based on a quantity of active secondary cells and/or a quantity of active BWPs, where the quantity of active secondary cells and the quantity of active BWPs are indicated in the candidate secondary cell activation status information.

It may be understood that, to avoid a sharp decrease in a throughput of the terminal device after a cell handover, a quantity of secondary cells in the active state of the terminal device after the cell handover should be the same as or close to the quantity of secondary cells in the active state before the handover, or a quantity of BWPs in the active state of the terminal device after the handover should be the same as or close to the quantity of BWPs in the active state before the handover. In other words, the quantity, indicated by the first activation indication information, of candidate secondary cells in the active state is the same as or close to the quantity of secondary cells in the active state of the terminal device in the first DU, or the quantity, indicated by the first activation indication information, of BWPs in the active state is the same as or close to the quantity of BWPs in the active state of the terminal device in the first DU.

S805: The CU sends a second request message to the second DU, where the second request message is used to request to set up a context for the terminal device, and the second request message includes a CGI of a first cell.

For a specific implementation of S805, refer to the descriptions of the specific implementation of S501, S601, or S701.

S806: The second DU sends a second response message and the first activation indication information to the CU, where the second response message includes configuration information of the first cell. In a possible implementation, the second response message includes the first activation indication information.

For that the second response message includes the configuration information of the first cell, refer to the descriptions of the specific implementation of S502, S602, or S702. A difference between the second response message in S806 and the second response message in S502 (or S602 or S702) lies in that the second response message in S806 may further indicate an activation status of and/or an activation status of a BWP of at least one candidate secondary cell (including a first candidate secondary cell and a second candidate secondary cell) corresponding to the second DU.

S807: The CU sends a first message and the first activation indication information to the first DU, where the first message includes configuration information of the first candidate cell group, and the configuration information of the first candidate cell group includes identification information of the first candidate cell group and the configuration information of the first cell. In a possible implementation, the first message includes the first activation indication information (for example, the configuration information of the first candidate cell group further includes the first activation indication information).

For the first message, refer to the descriptions of the specific implementation of S503, S603, or S703. A difference between the first message in S807 and the first message in S503 (or S603 or S703) lies in that the first message may further indicate an activation status of and/or an activation status of a BWP of at least one candidate secondary cell (including the first candidate secondary cell and the second candidate secondary cell) corresponding to the second DU.

S808: The first DU sends the configuration information of the first candidate cell group and the first activation indication information to the terminal device, where the configuration information of the first candidate cell group includes the configuration information of the first cell and the identification information of the first candidate cell group. In a possible implementation, the configuration information of the first candidate cell group includes the first activation indication information.

For S808, refer to the descriptions of the specific implementation of S401, S504, S604, or S704. A difference between S808 and S401 (or S504, S604, or S704) lies in that the first DU further indicates, to the terminal device, an activation status and/or an activation status of the BWP of at least one candidate secondary cell (including the first candidate secondary cell and the second candidate secondary cell) in the first candidate cell group.

S809: The terminal device sends a configuration complete message to the first DU, so that the first DU sends the configuration complete message to the CU. The configuration complete message indicates that the terminal device completes the configuration.

S810: The terminal device sends a measurement result of the first candidate cell group to the first DU.

S811: The terminal device receives a handover command from the first DU. The handover command includes the identification information of the first candidate cell group.

For specific implementations of S810 and S811, refer to the descriptions of the specific implementations of S402 and S403 (or S506 and S507, or S606 and S607, or S706 and S707).

S812: The terminal device performs the handover to the first cell based on the identification information of the first candidate cell group, and activates the at least one candidate secondary cell and/or the BWP in the first candidate cell group based on the first activation indication information.

For a manner in which the terminal device performs the handover to the first cell based on the identification information of the first candidate cell group, refer to the foregoing descriptions of the specific implementation of S404 (or S508, S608, or S708). A difference between the first cell in S812 and the first cell in S404 (or S508, S608, or S708) lies in that the first cell is a candidate primary cell in the first candidate cell group. Further, after performing the handover to the first cell, the terminal device activates the at least one candidate secondary cell and/or the BWP in the first candidate cell group based on an indication of the first activation indication information. In this way, the quantity of secondary cells in the active state of the terminal device after the cell handover is the same as or close to the quantity of secondary cells in the active state before the handover, or the quantity of BWPs in the active state of the terminal device after the handover is the same as or close to the quantity of BWPs in the active state before the handover. In other words, the terminal device performs a CA handover. To be specific, the terminal device is in a CA connection before the handover (the terminal device is connected to a plurality of cells, including a primary cell and a secondary cell), and the terminal device is also in the CA connection after the handover, so that a quantity of cells connected to the terminal device before the handover is the same as or close to a quantity of cells connected to the terminal device after the handover, or a quantity of BWPs activated by the terminal device before the handover is the same as or close to a quantity of BWPs activated by the terminal device after the handover. This avoids a throughput decrease of the terminal device before and after the handover.

In conclusion, according to the handover method shown in FIG. 8, the terminal device may perform fast CA activation after performing the cell handover, to ensure that a throughput after the cell handover is the same as or close to a throughput before the cell handover, thereby meeting a service requirement.

In a possible implementation, this application further provides a format of a handover command. The format of the handover command may be used to transmit the handover commands in FIG. 4 to FIG. 8. The handover command is a MAC control element (Control Element, CE), and the handover command may include one or more of the following fields.
1. A CA handover identifier field or a single-cell handover identifier field, where the CA handover identifier field indicates whether a CA handover is performed, and the single-cell handover identifier field indicates a single-cell handover, including a secondary cell handover or a primary cell handover. In a possible implementation, the CA handover identifier field and the single-cell handover identifier field are a same field. For example, if the field is 0, it indicates that this handover is the single-cell handover (including the secondary cell handover or the primary cell handover); and if the field is 1, the handover is a CA group handover (including the primary cell handover and the secondary cell handover). The CA group handover means that a first candidate cell group (a cell group of a terminal device after a handover) is different from a cell group of the terminal device before the handover, and is an inter-cell group handover. The single-cell handover means that the first candidate cell group (the cell group of the terminal device after the handover) is the same as the cell group of the terminal device before the handover, and is an intra-cell group handover.
2. A source cell indication field, where the field indicates a cell index before the handover in the single-cell handover.
3. A target cell indication field, where the field indicates a cell index after the handover in the CA group handover or the single-cell handover.
4. An active (or inactive) cell indication field, where the field indicates a cell index of a to-be-activated (or to-be-deactivated) cell. In other words, the cell index of the to-be-activated (or to-be-deactivated) cell in this application may be indicated in S808 (that is, the first activation indication information). The cell index of the to-be-activated (or to-be-deactivated) cell may be further indicated in the handover command (for example, S810).
5. A beam indication field corresponding to a target cell, which indicates a serving beam after the handover. After the cell handover is completed, the terminal device performs data transmission (for example, PDCCH receiving or PDSCH receiving) via the serving beam.
6. An active (or inactive) BWP indication field, where the field indicates an identifier of a to-be-activated (or to-be-deactivated) BWP in a single-cell handover procedure.

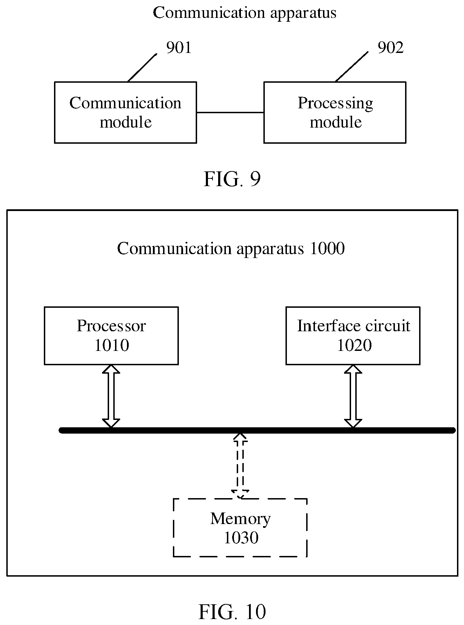

FIG. 9 is a diagram of a structure of a communication apparatus according to an embodiment of this application. The communication apparatus shown in FIG. 9 may be configured to implement some or all functions of the terminal device in embodiment corresponding to the foregoing handover method, or configured to implement some or all functions of the first DU in the foregoing embodiments.

In an embodiment, the communication apparatus shown in FIG. 9 may be configured to implement some or all functions of the terminal device in the method embodiments described in FIG. 4 to FIG. 8. The apparatus may be a terminal device, or may be an apparatus in the terminal device, or may be an apparatus that can be used together with the terminal device. The communication apparatus may alternatively be a chip system. The communication apparatus shown in FIG. 9 may include a communication module 901 and a processing module 902.

The communication module 901 is configured to: receive configuration information of a first candidate cell group from a first distributed unit DU, where the configuration information of the first candidate cell group includes configuration information of a first cell and identification information of the first candidate cell group; send a measurement result of the first candidate cell group to the first DU; and receive a handover command from the first DU, where the handover command includes the identification information of the first candidate cell group.

The processing module 902 is configured to perform a handover to the first cell based on the identification information of the first candidate cell group.

In a possible implementation, the processing module 902 is configured to perform data transmission based on the configuration information of the first cell via the first cell and a second DU corresponding to the first cell.

In a possible implementation, the processing module 902 is further configured to perform the handover to the first cell and a third cell in the first candidate cell group based on the identification information of the first candidate cell group, where the first cell is a primary cell in the first candidate cell group, the third cell is a secondary cell in the first candidate cell group, and the first candidate cell group is different from a cell group of the terminal device before the handover.

In a possible implementation, the configuration information of the first candidate cell group includes a first index, and the first index identifies the first cell in the first candidate cell group.

In a possible implementation, the handover command further includes the first index.

In a possible implementation, the processing module 902 is further configured to: determine the first candidate cell group based on the identification information of the first candidate cell group; and perform, based on the first index, the handover to the first cell corresponding to the first index in the first candidate cell group.

In a possible implementation, a bit of the first index is smaller than a bit of a cell global identifier of the first cell, or is smaller than a bit of a PCI of the first cell.

In a possible implementation, the configuration information of the first candidate cell group is encrypted.

In a possible implementation, the communication module 901 is further configured to: receive indication information of a first resource from the first DU; and send the measurement result of the first candidate cell group to the first DU via the first resource.

In a possible implementation, the measurement result of the first candidate cell group is a measurement result of the first cell, and the measurement result of the first cell includes the first index and a group identifier of the first candidate group.

In a possible implementation, the measurement result of the first candidate cell group is obtained based on the measurement result of the first cell and a measurement result of a second cell, the second cell belongs to the first candidate cell group, and the measurement result of the first candidate cell group includes the identification information of the first candidate cell group.

In a possible implementation, the configuration information of the first candidate cell group includes configuration information of one candidate primary cell and configuration information of at least one first candidate secondary cell.

In a possible implementation, the configuration information of the first candidate cell group further includes configuration information of at least one second candidate secondary cell, and the second candidate secondary cell is used for a plurality of secondary cell handovers.

In a possible implementation, the communication module 901 is further configured to: receive first indication information from the first DU, where the first indication information indicates consecutive handovers after a single handover, the configuration information of the first candidate cell group is used for one handover in the single handover, and the configuration information of the first candidate cell group is used for a plurality of handovers in the consecutive handovers.

In a possible implementation, the configuration information of the first cell includes first configuration information of the first cell serving as the candidate primary cell and second configuration information of the first cell serving as the candidate secondary cell.

In a possible implementation, the handover command further includes second indication information, and the second indication information indicates that the first cell is a primary cell or a secondary cell. If the second indication information indicates that the first cell is the primary cell, the processing module 902 is further configured to perform data transmission based on the first configuration information of the first cell; or if the second indication information indicates that the first cell is the secondary cell, the processing module 902 is further configured to perform data transmission based on the second configuration information of the first cell.

In a possible implementation, the first cell is a candidate primary cell in the first candidate cell group, and the communication module 901 is further configured to receive first activation indication information from the first DU, where the first activation indication information indicates an initial status and/or an initial status of a BWP of at least one candidate secondary cell in the first candidate cell group, and the initial status includes an active state or an inactive state.

For more detailed descriptions of the communication module 901 and the processing module 902, refer to related descriptions of the terminal device in the foregoing method embodiments. Details are not described herein again.

**In** an embodiment, the communication apparatus shown in FIG. 9 may be configured to implement some or all functions of the first DU in the method embodiments described in FIG. 4 to FIG. 8. The apparatus may be a first DU, or may be an apparatus in the first DU, or may be an apparatus that can be used together with the first DU. The communication apparatus may alternatively be a chip system. The communication apparatus shown in FIG. 9 may include a communication module 901 and a processing module 902. The processing module 902 is configured to process data.

The communication module 901 is configured to receive a first message from a central unit CU, where the first message includes configuration information of a first candidate group, and the configuration information of the first candidate cell group includes configuration information of a first cell and identification information of the first candidate cell group. The communication module 901 is further configured to send the configuration information of the first candidate cell group to a terminal device; and the first DU receives a measurement result of the first candidate cell group from the terminal device. The processing module 902 is further configured to send a handover command to the terminal device based on the measurement result of the first candidate cell group, where the handover command includes the identification information of the first candidate cell group.

**In** a possible implementation, the configuration information of the first candidate cell group includes a first index, and the first index identifies the first cell in the first candidate cell group.

In a possible implementation, the handover command further includes a first index, and the first index indicates to perform the handover to the first cell.

In a possible implementation, a bit of the first index is smaller than a bit of a cell global identifier of the first cell, or is smaller than a bit of a PCI of the first cell.

In a possible implementation, the configuration information of the first candidate cell group is encrypted.

In a possible implementation, the first message further includes the identification information of the first candidate cell group.

In a possible implementation, the processing module 902 is further configured to allocate a first resource based on the identification information of the first candidate cell group, and the communication module 901 is further configured to send indication information of the first resource to the terminal device.

In a possible implementation, there is an association relationship between the first resource and the first candidate cell group. The communication module 901 is further configured to receive the measurement result of the first candidate cell group from the terminal device via the first resource; and the processing module 902 is further configured to determine the first candidate cell group based on the association relationship between the first resource and the first candidate cell group.

In a possible implementation, there is an association relationship between the first resource and the first candidate cell. The communication module 901 is further configured to receive the measurement result of the first candidate cell group from the terminal device via the first resource, where the measurement result of the first candidate cell group includes a measurement result of the first cell. The processing module 902 is further configured to determine the first cell based on the association relationship between the first resource and the first cell; and the processing module 902 is further configured to determine the first candidate cell group based on the first cell.

In a possible implementation, the measurement result of the first candidate cell group is the measurement result of the first cell, and the measurement result of the first cell includes the first index and a group identifier of the first candidate group.

In a possible implementation, the measurement result of the first candidate cell group is obtained based on the measurement result of the first cell and a measurement result of a second cell, the second cell belongs to the first candidate cell group, and the measurement result of the first candidate cell group includes the identification information of the first candidate cell group.

In a possible implementation, the configuration information of the first candidate cell group includes configuration information of one candidate primary cell and configuration information of at least one first candidate secondary cell.

In a possible implementation, the configuration information of the first candidate cell group further includes configuration information of at least one second candidate secondary cell, and the second candidate secondary cell is used for a plurality of secondary cell handovers.

In a possible implementation, the communication module 901 is further configured to send first indication information to the terminal device. The first indication information indicates a single handover or consecutive handovers, the configuration information of the first candidate cell group is used for one handover in the single handover, and the configuration information of the first candidate cell group is used for a plurality of handovers in the consecutive handovers.

In a possible implementation, the configuration information of the first cell includes first configuration information of the first cell serving as the candidate primary cell and second configuration information of the first cell serving as the candidate secondary cell.

In a possible implementation, the handover command further includes second indication information, and the second indication information indicates that the first cell is a primary cell or a secondary cell.

In a possible implementation, the communication module 901 is further configured to receive a first request message from the CU. The first request message is used to obtain an activation status and/or an activation status of a bandwidth part BWP of a secondary cell of the terminal device in the first DU. The communication module 901 is further configured to send a first response message to the CU, where the first response message indicates the activation status and/or the activation status of the BWP of the secondary cell of the terminal device in the first DU.

In a possible implementation, the first cell is a candidate primary cell in the first candidate cell group. The communication module 901 is further configured to receive first activation indication information from the CU, where the first activation indication information indicates an initial status and/or an initial status of a BWP of at least one candidate secondary cell in the first candidate cell group, and the initial status includes an active state or an inactive state; and the communication module 901 is further configured to send the first activation indication information to the terminal device.

For more detailed descriptions of the communication module 901 and the processing module 902, refer to related descriptions of the first DU in the foregoing method embodiments. Details are not described herein again.

FIG. 10 is a diagram of a structure of a communication apparatus 1000 according to this application. The communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, store input data required by the processor 1010 to run the instructions, or store data generated after the processor 1010 runs the instructions.

When the communication apparatus 1000 is configured to implement the methods in the foregoing method embodiments, the processor 1010 may be configured to perform the functions of the processing module 902, and the interface circuit 1020 may be configured to perform the functions of the communication module 901.

When the communication apparatus is a chip used in a terminal device, the chip in the terminal device implements the functions of the terminal device in the foregoing method embodiments. The terminal device receives information from another module (for example, a radio frequency module or an antenna) in the terminal device, where the information is sent by the terminal device to an access network device; or a chip of the access network device sends information to another module (for example, a radio frequency module or an antenna) in the access network device, where the information is sent by the access network device to the terminal device.

When the communication apparatus is a chip used in a first DU, the chip in the first DU implements the functions of the first DU in the foregoing method embodiments. The first DU chip receives information from another module (for example, a radio frequency module or an antenna) in the access network device, where the information is sent by the access network device or the another network device to the terminal device; or a chip of the terminal device sends information to another module (for example, a radio frequency module or an antenna) in the terminal device, where the information is sent by the terminal device to the access network device or another network device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the access network device or the terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, all or some of embodiments may be implemented in a form of computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing procedures do not mean an execution sequence, and the execution sequence of the procedures should be determined based on functions and internal logic of the procedures.

An embodiment of this application further provides a computer-readable storage medium. The computer-readable storage medium stores computer-executable instructions, and when the computer-executable instructions are executed, the methods performed by the terminal device or the access network device in the foregoing method embodiments are implemented.

An embodiment of this application further provides a computer program product. The computer program product includes a computer program, and when the computer program is executed, the methods performed by the terminal device or the access network device in the foregoing method embodiments are implemented.

An embodiment of this application further provides a communication system. The communication system includes a terminal device or an access network device. The terminal device is configured to perform the methods performed by the terminal device in the foregoing method embodiments. The access network device is configured to perform the methods performed by the access network device in the foregoing method embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

Descriptions of embodiments provided in this application may refer to each other, and the descriptions of embodiments have respective focuses. For a part that is not described in detail in an embodiment, refer to related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited. Unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of the present invention, "B corresponding to A" indicates that B is associated with A, and B may be determined based on A. However, it should be further understood that determining B based on A does not mean that B is determined based only on A. B may alternatively be determined based on A and/or other information.

Descriptions such as "first" and "second" in embodiments of this application are merely used for illustration and distinguishing between described objects, do not represent a sequence or indicate a special limitation on a quantity of described objects in embodiments of this application, and cannot constitute any limitation on embodiments of this application.

It may be understood that in embodiments of this application, the terminal and/or the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A handover method, wherein the method comprises:
receiving configuration information of a first candidate cell group from a first distributed unit DU, wherein the configuration information of the first candidate cell group comprises configuration information of a first cell and identification information of the first candidate cell group;
sending a measurement result of the first candidate cell group to the first DU;
receiving a handover command from the first DU, wherein the handover command comprises the identification information of the first candidate cell group; and
performing a handover to the first cell based on the identification information of the first candidate cell group.

2. The method according to claim 1, wherein the method further comprises:
performing, based on the configuration information of the first cell, data transmission with a second DU corresponding to the first cell via the first cell.

3. The method according to claim 1 or 2, wherein the performing a handover to the first cell based on the identification information of the first candidate cell group comprises:
performing the handover to the first cell and a third cell in the first candidate cell group based on the identification information of the first candidate cell group, wherein the first cell is a primary cell in the first candidate cell group, the third cell is a secondary cell in the first candidate cell group, and the first candidate cell group is different from a cell group of the terminal device before the handover.

4. The method according to claim 1, wherein the configuration information of the first candidate cell group comprises a first index, and the first index identifies the first cell in the first candidate cell group.

5. The method according to claim 4, wherein the handover command further comprises the first index, and the first index indicates to perform the handover to the first cell.

6. The method according to claim 5, wherein the performing a handover to the first cell based on the identification information of the first candidate cell group comprises:
determining the first candidate cell group based on the identification information of the first candidate cell group; and
performing, based on the first index, the handover to the first cell corresponding to the first index in the first candidate cell group.

7. The method according to any one of claims 4 to 6, wherein a bit of the first index is smaller than a bit of a cell global identifier of the first cell.

8. The method according to any one of claims 4 to 7, wherein the measurement result of the first candidate cell group is a measurement result of the first cell, and the measurement result of the first cell comprises the first index and a group identifier of the first candidate group.

9. The method according to any one of claims 1 to 8, wherein the configuration information of the first candidate cell group is encrypted.

10. The method according to any one of claims 1 to 9, wherein the method further comprises:
receiving indication information of a first resource from the first DU; and
sending the measurement result of the first candidate cell group to the first DU via the first resource.

11. The method according to any one of claims 1 to 9, wherein the measurement result of the first candidate cell group is obtained based on the measurement result of the first cell and a measurement result of a second cell; and
the second cell belongs to the first candidate cell group, and the measurement result of the first candidate cell group comprises the identification information of the first candidate cell group.

12. The method according to any one of claims 1 to 11, wherein the configuration information of the first candidate cell group comprises configuration information of one candidate primary cell and configuration information of at least one first candidate secondary cell.

13. The method according to claim 12, wherein the configuration information of the first candidate cell group further comprises configuration information of at least one second candidate secondary cell, and the second candidate secondary cell is used for a plurality of secondary cell handovers.

14. The method according to any one of claims 1 to 13, wherein the method further comprises:
receiving first indication information from the first DU, wherein the first indication information indicates a single handover or consecutive handovers, the configuration information of the first candidate cell group is used for one handover in the single handover, and the configuration information of the first candidate cell group is used for a plurality of handovers in the consecutive handovers.

15. The method according to any one of claims 1 to 11, wherein the configuration information of the first cell comprises first configuration information of the first cell serving as a candidate primary cell and second configuration information of the first cell serving as a candidate secondary cell.

16. The method according to claim 15, wherein the handover command further comprises second indication information, and the second indication information indicates that the first cell is a primary cell or a secondary cell; and
the method further comprises:
if the second indication information indicates that the first cell is the primary cell, performing data transmission based on the first configuration information of the first cell; or
if the second indication information indicates that the first cell is the secondary cell, performing data transmission based on the second configuration information of the first cell.

17. The method according to any one of claims 1 to 11, wherein the first cell is a candidate primary cell in the first candidate cell group, and the method further comprises:
receiving first activation indication information from the first DU, wherein the first activation indication information indicates an initial status and/or an initial status of a BWP of at least one candidate secondary cell in the first candidate cell group, and the initial status comprises an active state or an inactive state.

18. A handover method, wherein the method comprises:
receiving a first message from a central unit CU, wherein the first message comprises configuration information of a first candidate cell group, and the configuration information of the first candidate cell group comprises configuration information of a first cell and identification information of the first candidate cell group;
sending the configuration information of the first candidate cell group to a terminal device;
receiving a measurement result of the first candidate cell group from the terminal device; and
sending a handover command to the terminal device based on the measurement result of the first candidate cell group, wherein the handover command comprises the identification information of the first candidate cell group.

19. The method according to claim 18, wherein the configuration information of the first candidate cell group comprises a first index, and the first index identifies the first cell in the first candidate cell group.

20. The method according to claim 19, wherein the handover command further comprises the first index, and the first index indicates to perform a handover to the first cell.

21. The method according to claim 19 or 20, wherein a bit of the first index is smaller than a bit of a cell global identifier of the first cell.

22. The method according to any one of claims 19 to 21, wherein the measurement result of the first candidate cell group is a measurement result of the first cell, and the measurement result of the first cell comprises the first index and a group identifier of the first candidate group.

23. The method according to any one of claims 18 to 22, wherein the configuration information of the first candidate cell group is encrypted.

24. The method according to any one of claims 18 to 23, wherein the first message further comprises the identification information of the first candidate cell group.

25. The method according to claim 24, wherein the method further comprises:
allocating a first resource based on the identification information of the first candidate cell group; and
sending indication information of the first resource to the terminal device.

26. The method according to claim 25, wherein there is an association relationship between the first resource and the first candidate cell group; and
the receiving a measurement result of the first candidate cell group from the terminal device comprises:
receiving the measurement result of the first candidate cell group from the terminal device via the first resource; and
determining the first candidate cell group based on the association relationship between the first resource and the first candidate cell group.

27. The method according to claim 25, wherein there is an association relationship between the first resource and the first candidate cell; and
the receiving a measurement result of the first candidate cell group from the terminal device comprises:
receiving the measurement result of the first candidate cell group from the terminal device via the first resource, wherein the measurement result of the first candidate cell group comprises the measurement result of the first cell;
determining the first cell based on the association relationship between the first resource and the first cell; and
determining the first candidate cell group based on the first cell.

28. The method according to any one of claims 18 to 26, wherein the measurement result of the first candidate cell group is obtained based on the measurement result of the first cell and a measurement result of a second cell; and
the second cell belongs to the first candidate cell group, and the measurement result of the first candidate cell group comprises the identification information of the first candidate cell group.

29. The method according to any one of claims 18 to 28, wherein the configuration information of the first candidate cell group comprises configuration information of one candidate primary cell and configuration information of at least one first candidate secondary cell.

30. The method according to claim 29, wherein the configuration information of the first candidate cell group further comprises configuration information of at least one second candidate secondary cell, and the second candidate secondary cell is used for a plurality of secondary cell handovers.

31. The method according to any one of claims 18 to 29, wherein the method further comprises:
sending first indication information to the terminal device, wherein the first indication information indicates a single handover or consecutive handovers, the configuration information of the first candidate cell group is used for one handover in the single handover, and the configuration information of the first candidate cell group is used for a plurality of handovers in the consecutive handovers.

32. The method according to any one of claims 18 to 28, wherein the configuration information of the first cell comprises first configuration information of the first cell serving as a candidate primary cell and second configuration information of the first cell serving as a candidate secondary cell.

33. The method according to claim 32, wherein the handover command further comprises second indication information, and the second indication information indicates that the first cell is a primary cell or a secondary cell.

34. The method according to any one of claims 18 to 28, wherein the method further comprises:
receiving a first request message from the CU, wherein the first request message is used to obtain an activation status and/or an activation status of a bandwidth part BWP of a secondary cell of the terminal device in a first DU; and
sending a first response message to the CU, wherein the first response message indicates the activation status and/or the activation status of the BWP of the secondary cell of the terminal device in the first DU.

35. The method according to claim 34, wherein the first cell is a candidate primary cell in the first candidate cell group; and
the method further comprises:
receiving first activation indication information from the CU, wherein the first activation indication information indicates an initial status and/or an initial status of a BWP of at least one candidate secondary cell in the first candidate cell group, and the initial status comprises an active state or an inactive state; and
sending the first activation indication information to the terminal device.

36. A communication apparatus, comprising a module or a unit configured to perform the method according to any one of claims 1 to 17, or comprising a module or a unit configured to perform the method according to any one of claims 18 to 35.

37. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, by using a logic circuit or executing code instructions, the method according to any one of claims 1 to 17 or claims 18 to 35.

38. A communication system, wherein the communication system comprises a terminal device and a first DU, the terminal device is configured to perform the method according to any one of claims 1 to 17, and the first DU is configured to perform the method according to any one of claims 18 to 35.

39. A computer-readable storage medium, wherein the storage medium stores a computer program or instructions, and when the computer program or the instructions are executed by a communication apparatus, the method according to any one of claims 1 to 17 or claims 18 to 35 is implemented.

40. A computer program product, wherein when a computer reads and executes the computer program product, the computer is enabled to perform the method according to any one of claims 1 to 17 or claims 18 to 35.
